(19) Europäisches Patentamt
European Patent Office
Office européen des brevets

(11) **EP 4 694 387 A1**

(12) **EUROPEAN PATENT APPLICATION**
published in accordance with Art. 153(4) EPC

(43) Date of publication:
**11.02.2026 Bulletin 2026/07**

(21) Application number: **23932102.9**

(22) Date of filing: **07.04.2023**

(51) International Patent Classification (IPC):
**H04W 52/18** (2009.01)     **H04W 16/28** (2009.01)
**H04W 72/21** (2023.01)

(52) Cooperative Patent Classification (CPC):
**H04W 16/28; H04W 52/18; H04W 72/21**

(86) International application number:
**PCT/JP2023/014442**

(87) International publication number:
**WO 2024/209692 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
  **Tokyo 100-6150 (JP)**
• **MATSUMURA, Yuki**
  **Tokyo 100-6150 (JP)**
• **NAGATA, Satoshi**
  **Tokyo 100-6150 (JP)**
• **WANG, Jing**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to one aspect of the present disclosure includes a receiving section that receives a configuration related to a Transmission Configuration Indication (TCI) state applicable to a plurality of signals and a first sounding reference signal (SRS) transmission power parameter associated with the TCI state indicated with absolute power, and a control section that performs transmission power control for an SRS, based on the first SRS transmission power parameter. According to one aspect of the present disclosure, power for a UL signal can be appropriately controlled.

```
Uplink-powerControl-r17 ::= SEQUENCE {
    ul-powercontrolId-r17   Uplink-powerControlId-r17,
    p0AlphaSetforPUSCH-r17  P0AlphaSet-r17 OPTIONAL, -- Need R
    p0AlphaSetforPUCCH-r17  P0AlphaSet-r17 OPTIONAL, -- Need R
    p0AlphaSetforSRS-r17    P0AlphaSet-r17 OPTIONAL -- Need R
}
P0AlphaSet-r17 ::= SEQUENCE {
    p0-r17    INTEGER (-202..24) OPTIONAL, -- Need R
    alpha-r17  Alpha OPTIONAL, -- Need S
    closedLoopIndex-r17 ENUMERATED { i0, i1 }
}
Uplink-powerControlId-r17 ::= INTEGER(1.. maxUL-TCI-r17)
```

FIG. 13

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). For the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), it is studied that a user terminal (a terminal, a User Equipment (UE)) controls transmission and reception processing, based on information related to quasi-co-location (QCL) (QCL assumption/Transmission Configuration Indication (TCI) state/spatial relation).

It is studied that a configured/activated/indicated TCI state is applied to a plurality of types of signals (channels/RSs). However, a transmission power control method for UL channels/signals (which may be simply referred to as UL signals) in this case may not be clear. Unless the method is clear, this may cause reduction in communication quality, reduction in throughput, and the like.

In view of this, the present disclosure has one object to provide a terminal, a radio communication method, and a base station that appropriately control power for a UL signal. Solution to Problem

A terminal according to one aspect of the present disclosure includes a receiving section that receives a configuration related to a Transmission Configuration Indication (TCI) state applicable to a plurality of signals and a first sounding reference signal (SRS) transmission power parameter associated with the TCI state indicated with absolute power, and a control section that performs transmission power control for an SRS, based on the first SRS transmission power parameter.

Advantageous Effects of Invention

According to one aspect of the present disclosure, power for a UL signal can be appropriately controlled.

Brief Description of Drawings

[FIG. 1] FIG. 1 shows an example of an SRS resource set configuration information element.
[FIG. 2] FIG. 2 shows an example of an SRS resource configuration information element.
[FIG. 3] FIG. 3 shows an example of an association of parameters related to an SRS.
[FIG. 4] FIG. 4 shows an example of an SRS frequency hopping band.
[FIG. 5] FIG. 5 shows an example of SRS frequency hopping.
[FIG. 6] FIG. 6 shows another example of SRS frequency hopping.

[FIG. 7] FIG. 7 shows an example of a table showing a relationship between a transmission comb number $K_{TC}$ and a maximum number of cyclic shifts $n_{SRS}^{CS,max}$ of an SRS in Rel. 16.

[FIG. 8] FIG. 8 shows an example of a table showing the transmission comb number $K_{TC}$ and a cyclic shift value $n_{SRS}^{CS,i}$ of the SRS when the number of SRS ports $N_{ap}^{SRS}$ is 2.

[FIG. 9] FIG. 9 shows an example of a table showing the transmission comb number $K_{TC}$ and the cyclic shift value $n_{SRS}^{CS,i}$ of the SRS when the number of SRS ports $N_{ap}^{SRS}$ is 4.

[FIG. 10] FIG. 10A and FIG. 10B show examples of a unified/common TCI framework.

[FIG. 11] FIG. 11A and FIG. 11B show examples of DCI based TCI state indication.

[FIG. 12] FIG. 12 is a diagram to show an example of RRC parameters for UL power control.

[FIG. 13] FIG. 13 is a diagram to show an example of transmission power parameters according to option 1-1.

[FIG. 14] FIG. 14 is a diagram to show an example of transmission power parameters according to option 1-2.

[FIG. 15] FIG. 15 is a diagram to show an example of transmission power parameters according to option 1-3.

[FIG. 16] FIG. 16 is a diagram to show an example of transmission power parameters according to option 1-4.

[FIG. 17] FIG. 17 is a diagram to show an example of a schematic structure of a radio communication system according to one embodiment.

[FIG. 18] FIG. 18 is a diagram to show an example of a structure of a base station according to one embodiment.

[FIG. 19] FIG. 19 is a diagram to show an example of a structure of a user terminal according to one embodiment.

[FIG. 20] FIG. 20 is a diagram to show an example of a hardware structure of the base station and the user terminal according to one embodiment.

[FIG. 21] FIG. 21 is a diagram to show an example of a vehicle according to one embodiment.

Description of Embodiments

(SRS)

In NR, there are various usages of a sounding reference signal (SRS). The SRS in NR is used not only for uplink (UL) CSI measurement that is also used in existing LTE (LTE Rel. 8 to Rel. 14), but is used also for downlink (DL) CSI measurement, beam management, and the like.

A UE may be configured with one or a plurality of SRS resources. Each SRS resource may be identified with an SRS resource index (SRI).

Each SRS resource may include one or a plurality of SRS ports (may correspond to one or a plurality of SRS ports). For example, the number of ports for each SRS may be 1, 2, 4, or the like.

The UE may be configured with one or a plurality of SRS resource sets. One SRS resource set may be associated with a certain number of SRS resources. The UE may use a common higher layer parameter for the SRS resources included in one SRS resource set. Note that the resource set in the present disclosure may be interpreted as a set, a resource group, a group, or the like.

Information related to the SRS resource or the resource set may be configured for the UE, using higher layer signaling, physical layer signaling, or a combination of these.

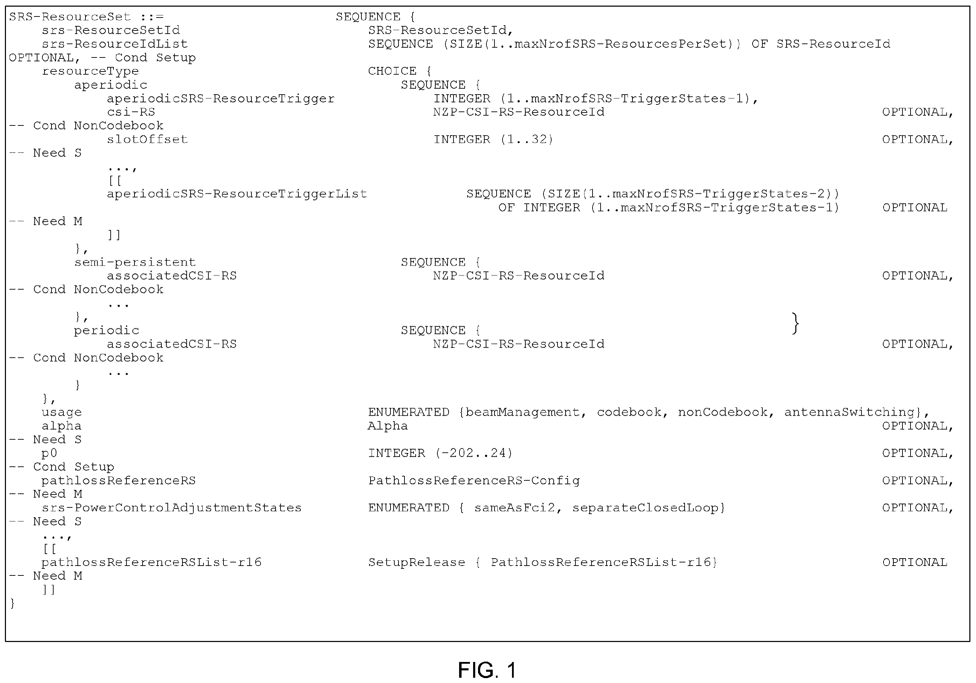

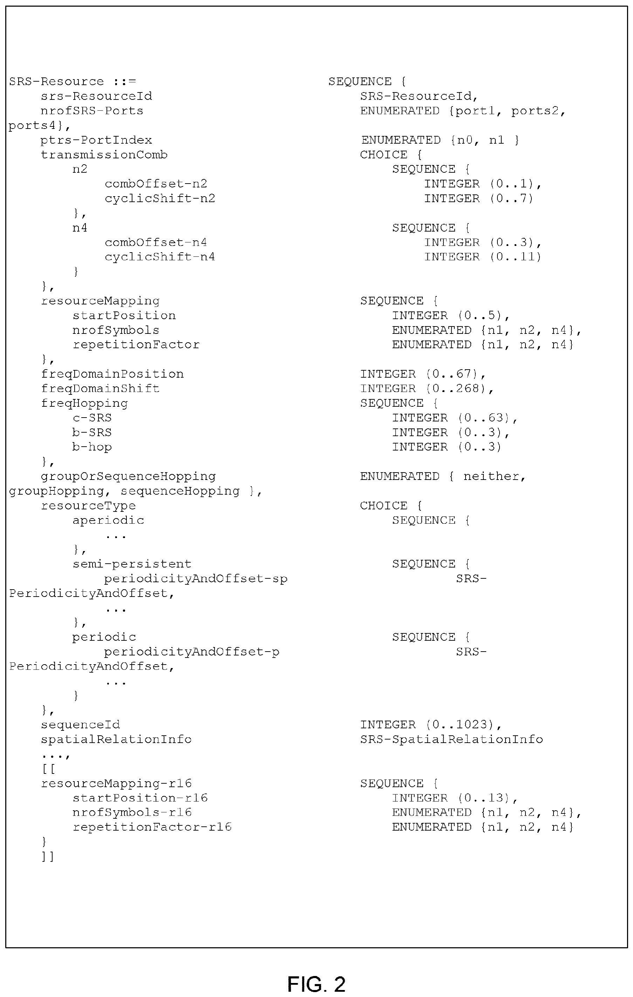

An SRS configuration information element (for example, an RRC information element "SRS-Config") may include an SRS resource set configuration information element (FIG. 1), an SRS resource configuration information element (FIG. 2), and the like.

The SRS resource set configuration information element (for example, an RRC parameter "SRS-ResourceSet") may include pieces of information of an SRS resource set ID (Identifier) (SRS-ResourceSetId), a list of SRS resource IDs (SRS-ResourceId) used in the resource set, an SRS resource type (resourceType), and a usage of the SRS.

Here, the SRS resource type may indicate a time domain behavior (same time domain behavior) of an SRS resource configuration, or may indicate any one of a periodic SRS (P-SRS), a semi-persistent SRS (SP-SRS), and an aperiodic SRS (A (AP)-SRS). Note that the UE may transmit the P-SRS and the SP-SRS periodically (or periodically after activation). The UE may transmit the A-SRS, based on an SRS request on DCI.

The usage of the SRS (an RRC parameter "usage", an L1 (Layer-1) parameter "SRS-SetUse") may be, for example, beam management (beamManagement), a codebook (CB), a non-codebook (NCB), antenna switching (antennaSwitcing), or the like. For example, the SRS having the usage of the codebook or the non-codebook may be used for determination of a precoder for codebook based or non-codebook based uplink shared channel (Physical Uplink Shared Channel (PUSCH)) transmission based on the SRI.

For the SRS having the usage of beam management, it may be assumed that only one SRS resource in each SRS resource set can be transmitted in a certain time instant (given time instant). Note that, in the same Bandwidth Part (BWP), when a plurality of SRS resources corresponding to the same time domain behavior respectively belong to different SRS resource sets, these SRS resources may be simultaneously transmitted.

The SRS resource configuration information element (for example, an RRC parameter "SRS-Resource") may include an SRS resource ID (SRS-ResourceId), the number of SRS ports, an SRS port number, a transmission comb number, SRS resource mapping (for example a time and/or frequency resource position, a resource offset, periodicity of the resources, the number of repetitions, the number of SRS symbols, an SRS bandwidth, or the like), hopping related information, an SRS resource type, a sequence ID, spatial relation information, and the like.

A value of the transmission comb number (transmissionComb) is {2, 4}. A value of the number of SRS ports (nrofSRS-Ports) $N_{ap}^{SRS}$ is {1, 2, 4}. A value of an antenna port number $p_i$ is {1000, 1001, ...}. A value of the number of SRS consecutive OFDM symbols (nrofSymbols) $N_{symb}^{SRS}$ is {1, 2, 4}. For a starting position (startPosition) in the time domain, an offset $l_{offset}$ of the symbols that can be counted backwards in a time domain direction from the end of a slot is {0, 1, ... 5}, and the starting position is given by $l_0 = N_{symb}^{slot} - 1 - l_{offset}$.

A configuration of the transmission comb number may include a comb offset and a cyclic shift (a cyclic shift (CS) index, a CS number).

The SRS from the UE in which at least one of the comb offset (subcarrier offset) = {0, 1, ... $K_{TC}$ - 1} and the CS is different may be multiplexed using the same transmission comb number, the same RB, and the same symbol.

The UE may switch Bandwidth Parts (BWPs) for transmitting the SRS for each slot, or may switch antennas. The UE may apply at least one of intra-slot hopping and inter-slot hopping to SRS transmission.

In an existing SRS, a frequency domain starting position $k_0^{p\_i}$ for $p_i$ (p_i) is given by the following calculation expression.

$$k_0^{p\_i} = k\text{-}_0^{p\_i} + \Sigma_{b=0}^{BSRS} K_{TC} M_{SC,b}^{SRS} n_b$$

Here, $k\text{-}$ indicates a variable with an overline placed over k, and may also be referred to as k-bar. $k\text{-}_0^{p\_i}$ may be based on a comb offset $K\text{-}_{TC}$. $K_{TC}$ is a transmission comb number. $M_{SC,b}^{SRS}$ is the number of subcarriers used for SRS transmission out of an SRS bandwidth $m_{SRS,b}$ [RB]. $n_b$ is a constant.

(SRS Antenna Switching)

In Rel-15 NR, as described above, antenna switching (which may be referred to as antenna port switching) can be configured as a usage of the SRS. SRS antenna switching may be used to perform downlink CSI acquisition in a time division duplex (TDD) band, using an uplink SRS, for example.

For example, for the UE having a capability that the number of antenna ports available for transmission is less than the number of antenna ports available for reception, UL SRS measurement may be used in order to determine a DL precoder.

Note that the UE may report, to a network, UE capability information (for example, an RRC parameter "supportedSRS-TxPortSwitch") indicating a transmission port switching pattern of the supported SRS. The pattern may be expressed in a format of "txry", such as "t1r2" and "t2r4", for example, and this may mean that SRS transmission can be performed using x antenna ports out of a total of y antennas (which may be expressed as xTyR). Here, y may correspond to all of or a subset of receive antennas of the UE.

For example, for DL CSI acquisition, the UE of 2T4R (2 transmission ports, 4 reception ports) may include two SRS resources each including two ports, and may be configured with the SRS resource set having the usage of antenna switching.

Note that, when x and y in "txry" have the same value, it may be expressed as xT = xR (for example, 4T = 4R).

(Multi-Port SRS Transmission)

Multi-port SRS transmission will be described. When multi-port SRS transmission is performed, the UE performs multiplexing using a cyclic shift of a base sequence. The following expression shows a cyclic shift $\alpha_i$ in an antenna port $P_i$.

$$\alpha_i = 2\pi \frac{n_{SRS}^{CS,i}}{n_{SRS}^{CS,max}},$$

where:

$$n_{SRS}^{CS,i} = \begin{cases} \left(n_{SRS}^{CS} + \dfrac{n_{SRS}^{CS,max}\left\lfloor\dfrac{p_i - 1000}{2}\right\rfloor}{N_{ap}^{SRS}/2}\right) \bmod n_{SRS}^{CS,max} \\ \qquad if\ N_{ap}^{SRS} = 4\ and\ n_{SRS}^{CS,max} = 6, \\ \left(n_{SRS}^{CS} + \dfrac{n_{SRS}^{CS,max}(p_i - 1000)}{N_{ap}^{SRS}}\right) \bmod n_{SRS}^{CS,max}\ otherwise \end{cases}$$

$$(A1)$$

It has been under study that the expression is used in Rel. 17. In the expression, a case in which the number of ports $N_{ap}^{SRS}$ is 4 and a maximum number of cyclic shifts $n_{SRS}^{CS,max}$ is 6 is defined as case 1, and a case other than that (otherwise) is defined as case 2. In case 1, the transmission comb number $K_{TC}$ is 8.

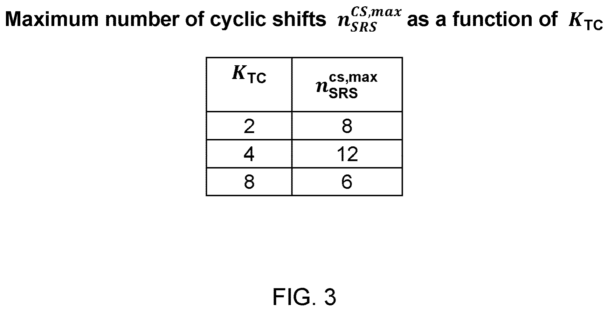

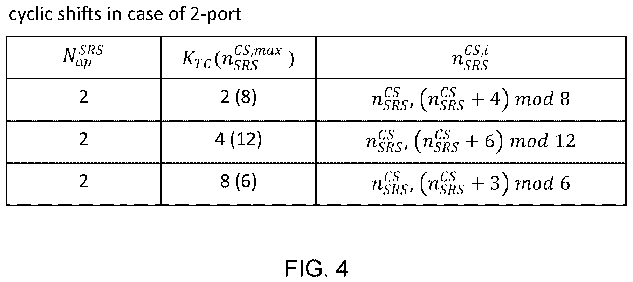

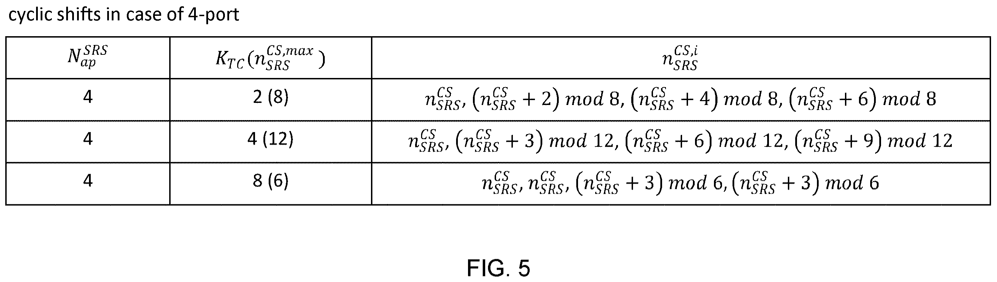

FIG. 3 is a table to show a relationship between the transmission comb number $K_{TC}$ and the maximum number of cyclic shifts $n_{SRS}^{CS,max}$ of the SRS in Rel. 16. Note that $n_{SRS}^{CS,max} \in \{0, 1, ..., n_{SRS}^{CS,max}\}$ and $N_{ap}^{SRS} \in \{1, 2, 4\}$. FIG. 4 is a table to show the transmission comb number $K_{TC}$ and a cyclic shift value $n_{SRS}^{CS,i}$ of the SRS when the number of SRS ports $N_{ap}^{SRS}$ is 2. FIG. 5 is a table to show the transmission comb number $K_{TC}$ and the cyclic shift value $n_{SRS}^{CS,i}$ of the SRS when the number of SRS ports $N_{ap}^{SRS}$ is 4.

The following expression shows the resource starting position $k_0^{p\_i}$ in the frequency direction.

$$k_0^{p_i} = \bar{k}_0^{p_i} + n_{offset}^{FH} + n_{offset}^{RPFS},$$

where:

$$\bar{k}_0^{p_i} = n_{shift}N_{SC}^{RB} + \left(k_{TC}^{p_i} + k_{offset}^{l'}\right)\bmod K_{TC}$$

$$k_{TC}^{p_i}$$

$$= \begin{cases} \left(\bar{k}_{TC} + K_{TC}/2\right)\bmod K_{TC} \\ \quad if\ N_{ap}^{SRS} = 4,\ p_i \in \{1001, 1003\}\ and\ n_{SRS}^{CS,max} = 6, \\ \left(\bar{k}_{TC} + K_{TC}/2\right)\bmod K_{TC} \\ if\ N_{ap}^{SRS} = 4,\ p_i \in \{1001, 1003\}\ and\ n_{SRS}^{CS} = \in \left\{n_{SRS}^{cs.max}/2,\ ...,\ n_{SRS}^{cs.max} - 1\right\}, \\ \bar{k}_{TC}\ otherwise \end{cases}$$

$$k_{offset}^{l'}\ :\ \text{Positioning specific offset}$$

$$n_{offset}^{FH} = \sum_{b=0}^{B_{SRS}} m_{SRS,b}N_{SC}^{RB}n_b$$

$$n_{offset}^{RPFS} = N_{SC}^{RB}m_{SRS,B_{SRS}}\left(\left(k_F + k_{hop}\right)\bmod P_F\right)/P_F$$

$$(A2)$$

It has been under study that the expression is used in Rel. 17. Note that, regarding three cases of $k_{TC}^{p\_i}$, first case A corresponds to odd-numbered ports {1001, 1003} when the transmission comb number is 8. Second case B corresponds to odd-numbered ports {1001, 1003} having average or more cyclic shift values ($n_{ap}^{CS} = \{n_{SRS}^{CS,max}/2, ..., n_{SRS}^{CS,max}\}$) when the transmission comb number is 2 or 4. Third case C is a case other than the above.

nshift is configured with a parameter freqDomainShift of the SRS resource configuration information element (FIG. 2). For $k_{TC}^-$, combOffset of the SRS resource configuration information element is used. $K_{TC}$ is configured with transmissionComb of the SRS resource configuration information element. In other words, in case C, values of RRC parameters are applied as they are.

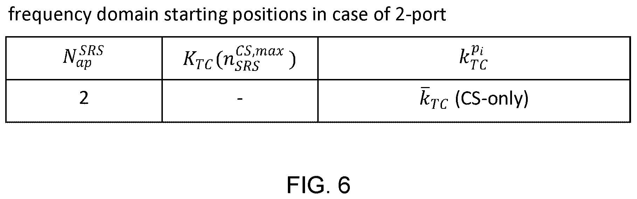

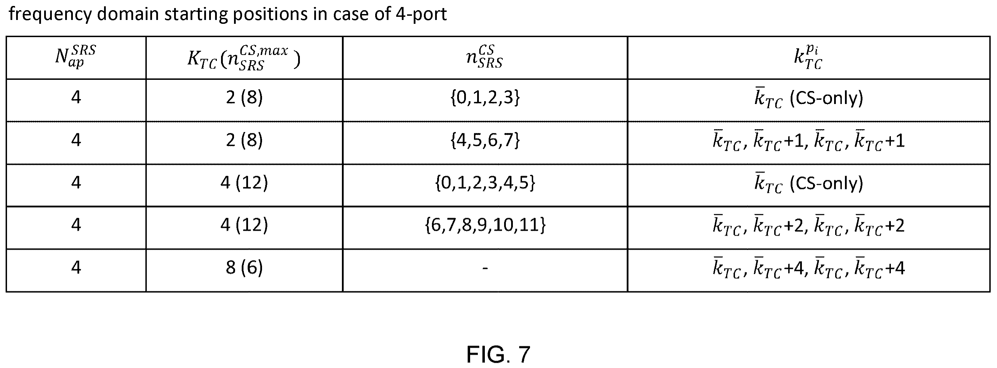

FIG. 6 shows the resource starting position $k_{TC}^{p\_i}$ in the frequency direction when the number of SRS ports $N_{ap}^{SRS}$ is 2. In the present example, case C is used. FIG. 7 shows the resource starting position $k_0^{p\_i}$ in the frequency direction when the number of SRS ports $N_{ap}^{SRS}$ is 4. In the present example, case C is applied in a first or third row (a case of ($n_{SRS}^{CS}$) = {0, 1, 2, 3} or {0, 1, 2, 3, 4, 5}), case B is applied in a second or fourth row (a case of ($n_{SRS}^{CS}$) = {4, 5, 6, 7} or {6, 7, 8, 9, 10, 11}), and case A is applied in a fifth row (a case of $K_{TC}$ ($n_{SRS}^{CS,Max}$) = 8 (6)).

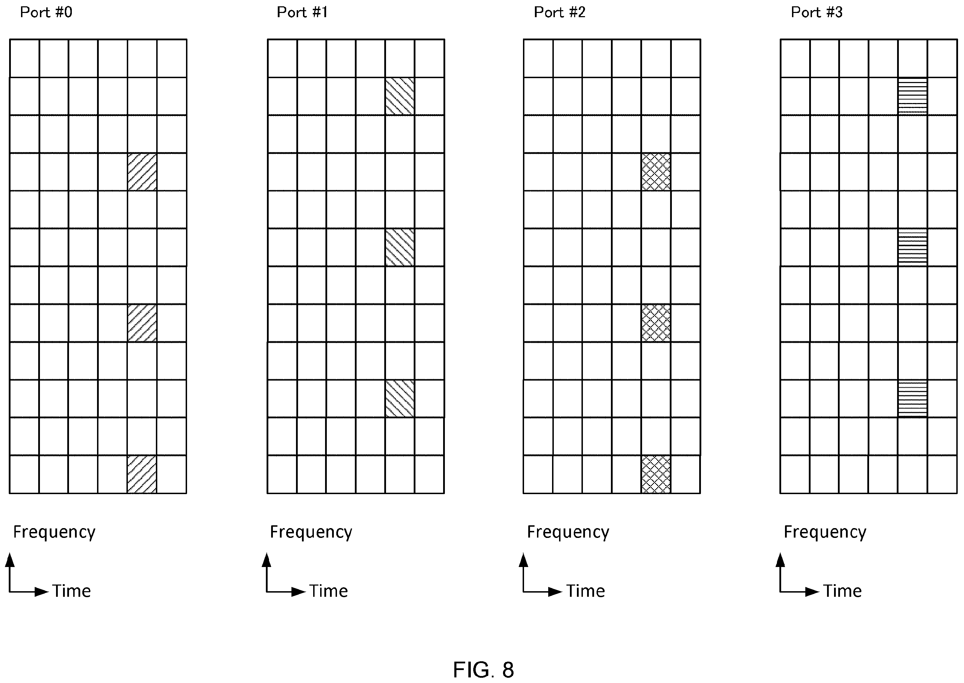

FIG. 8 shows SRS allocation in each port when the transmission comb number is 4. Case C is used in ports #0 and 2 of the present example, and case B is used in ports #1 and 3. In each port, different cyclic shifts are used. Note that, in FIG. 8, the horizontal axis represents time and the vertical axis represents frequency. The same holds true for other figures showing SRS allocations.

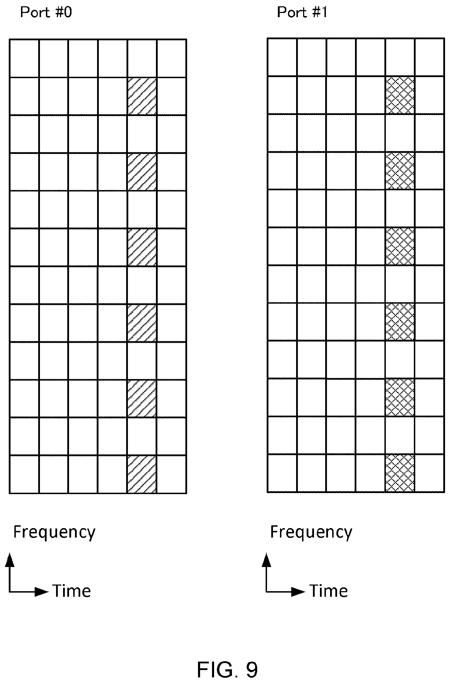

FIG. 9 shows SRS allocation in each port when the transmission comb number is 2. Case C is used in ports #0 and 1 of the present example. In each port, different cyclic shifts are used.

(Base Sequence)

The base sequence of the SRS is given by the following expression.

$$r^{(p_i)}(n, l') = r_{u,v}^{(\alpha_i,\delta)}(n)$$

$$0 \le n \le M_{sc,b}^{SRS}(n) - 1$$

$$l' \in \left\{0, 1, ..., N_{symb}^{SRS} - 1\right\}$$

$$r_{u,v}^{(\alpha_i,\delta)}(n) = e^{j\alpha n} \bar{r}_{u,v}(n), \qquad 0 \le n \le M_{ZC}$$

$$(B1)$$

At least one of sequence hopping and group hopping for a low PAPR sequence may be configured by RRC. A base sequence $r_{u,v}(n)$ is divided into a plurality of groups. r⁻ indicates a variable with an overline placed over r, and may also be referred to as r-bar. u = {0, 1, ..., 29} represents a group number, and v represents a base sequence number in a group. Each group includes one base sequence (v = 0) having a length of $mM_{ZC} = N_{sc}^{RB}/2^{\delta}$, where $1/2 \le m/2^{\delta} \le 5$, and two base sequences (v = 0, 1) having a length of $mM_{ZC} = N_{sc}^{RB}/2^{\delta}$, where $6 \le m/2^{\delta}$. Definition of the base sequences $r_{u,v}^-(0), ..., r_{u,v}^-$ ($M_{ZC}$ - 1) depends upon the sequence length $M_{ZC}$.

In group hopping, the group number u is given by the following expression, based on an SRS sequence ID $n_{ID}^{SRS}$ and a symbol number in a radio frame for SRS resources.

$$u = \left(f_{gh}\left(n_{s,f}^{\mu}, l'\right) + n_{ID}^{SRS}\right) \bmod 30$$

$$(C1)$$

The symbol number is based on a slot number $n_{s,f}^{\mu}$ in a radio frame, the number of symbols $N_{symb}^{slot}$ in a slot, a start symbol $l_0$ for the SRS resources, and an SRS symbol number l' ∈ {0, 1, ..., $N_{symb}^{SRS}$ - 1} in the SRS resources. $n_{ID}^{SRS}$ ∈ {0, 1, ..., 1023} is given by a higher layer parameter sequenceId in an SRS-Resource IE, or $n_{ID}^{SRS}$ ∈ {0, 1, ..., 65535} is given by a higher layer parameter sequenceId in an SRS-PosResource-r16 IE.

When groupOrSequenceHopping is equal to 'neither', neither group hopping nor sequence hopping is used. In this case, the group number u and the sequence number v are given by the following expression.

$$f_{gh}\left(n_{s,f}^{\mu}, l'\right) = 0$$

$$v = 0$$

$$(C2)$$

When groupOrSequenceHopping is equal to 'groupHopping', group hopping is used and sequence hopping is not used. In this case, the group number u and the sequence number v are given by the following expression.

$$f_{gh}\left(n_{s,f}^{\mu}, l'\right) = \left(\sum\nolimits_{m=0}^{7} c\left(8\left(n_{s,f}^{\mu} N_{symb}^{slot} + l_0 + l'\right) + m\right) \cdot 2^m\right) \bmod 30$$

$$v = 0$$

$$(C3)$$

Here, at the start of each radio frame, a pseudo-random sequence c(i) is initialized by $c_{init} = n_{ID}^{SRS}$.

When groupOrSequenceHopping is equal to 'sequenceHopping', sequence hopping is used and group hopping is not used. In this case, the group number u and the sequence number v are given by the following expression.

$$f_{gh}\left(n_{s,f}^{\mu}, l'\right) = 0$$

$$v = \begin{cases} c\left(n_{s,f}^{\mu} N_{symb}^{slot} + l_0 + l'\right) & M_{sc,b}^{SRS} \geq 6N_{sc}^{RB} \\ 0 & otherwise \end{cases}$$

$$(C4)$$

Here, at the start of each radio frame, a pseudo-random sequence c(i) is initialized by $c_{init} = n_{ID}^{SRS}$.

(SRS Transmission Power Control)

Using an index l of a power control adjustment state (closed loop state), transmission power ($P_{SRS,b,f,c}(i, q_s, l)$) of the SRS in an SRS transmission occasion (also referred to as a transmission period or the like) i regarding an active UL BWP b of a carrier f of a serving cell c is given by the following expression, based on $P_{CMAX,f,c}(i)$, $P_{O\_SRS,b,f,c}(q_s)$, $M_{SRS,b,f,c}(i)$, $\alpha_{SRS,b,f,c}(q_s)$, $PL_{b,f,c}(q_d)$, and $h_{b,f,c}(i, l)$.

$$P_{SRS,b,f,c}(i, q_s, l) = \min \begin{cases} P_{CMAX,f,c}(i), \\ P_{O\_SRS,b,f,c}(q_s) + 10 \log_{10}(2^{\mu} \cdot M_{SRS,b,f,c}(i)) \\ \qquad + \alpha_{SRS,b,f,c}(q_s) \cdot PL_{b,f,c}(q_d) + h_{b,f,c}(i, l) \end{cases} \quad [dBm]$$

$$(D1)$$

The SRS transmission occasion i is a period in which the SRS is transmitted, and may include, for example, one or more symbols, one or more slots, or the like.

Here, $P_{CMAX,f,c}(i)$ is, for example, UE maximum output power for the carrier f of the serving cell c in the SRS transmission occasion i. $P_{O\_SRS,b,f,c}(q_s)$ is a parameter related to target received power provided by p0 for the active UL BWP b of the carrier f of the serving cell c and an SRS resource set $q_s$ (provided by SRS-ResourceSet and SRS-ResourceSetId) (also referred to as, for example, a parameter related to a transmission power offset, a transmission power offset P0, a target received power parameter, or the like).

$M_{SRS,b,f,c}(i)$ is an SRS bandwidth represented by the number of resource blocks for the SRS transmission occasion i on the active UL BWP b of the carrier f of the serving cell c and the subcarrier spacing $\mu$.

$\alpha_{SRS,b,f,c}(q_s)$ is provided by $\alpha$ (for example, alpha) for the active UL BWP b of the carrier f of the serving cell c and the subcarrier spacing $\mu$ and the SRS resource set $q_s$. $\alpha$ (for example, alpha) may be defined as a path loss compensation coefficient for UL power control.

$PL_{b,f,c}(q_d)$ is a DL path loss estimation value [dB] (path loss estimation [dB], path loss compensation) calculated by the UE using the RS resource index $q_d$ for the active DL BWP of the serving cell c and the SRS resource set $q_s$. The RS resource index $q_d$ is a path loss reference RS (an RS for path loss reference, a pathloss (PL)-RS, or a DL-RS for path loss measurement, which is provided by pathlossReferenceRS, for example) associated with the SRS resource set $q_s$, and is an SS/PBCH block index (for example, ssb-Index) or a CSI-RS resource index (for example, csi-RS-Index).

If the UE is not given the path loss reference RS (pathlossReferenceRSs) or before the UE is given a dedicated higher layer parameter, the UE calculates $PL_{b,f,c}(q_d)$ using an RS resource obtained from an SS/PBCH block used by the UE to acquire an MIB.

$h_{b,f,c}(i, l)$ is an SRS power control adjustment state for the active UL BWP of the carrier f of the serving cell c in the SRS transmission occasion i. When a configuration of the SRS power control adjustment state (for example, srs-PowerControlAdjustmentStates) indicates the same power control adjustment state for SRS transmission and PUSCH transmission, it is the current PUSCH power control adjustment state $f_{b,f,c}(i, l)$. On the other hand, when the configuration of the SRS power control adjustment state indicates an independent power control adjustment state for SRS transmission and PUSCH transmission, the SRS power control adjustment state $h_{b,f,c}(i)$ may be based on $\delta_{SRS,b,f,c}(m)$.

When TPC accumulation is enabled, $h_{b,f,c}(i)$ may be based on an accumulated value of $\delta_{SRS,b,f,c}(m)$.

When TPC accumulation is disabled, $h_{b,f,c}(i)$ may be $\delta_{SRS,b,f,c}(i)$ (absolute value).

Here, $\delta_{SRS,b,f,c}(m)$ may be a TPC command value coded by being combined with another TPC command in the PDCCH having DCI (for example, DCI format 2_3). $\Sigma_{m=0}^{C(Si)-1}\delta_{SRS,b,f,c}(m)$ may be a sum of TPC commands in a set $S_i$ of TPC command values having cardinality C $(S_i)$ received by the UE between $K_{SRS}(i - i_0) - 1$ symbols before an SRS transmission occasion i - $i_0$ and $K_{SRS}(i)$ symbols before an SRS transmission occasion i on the active UL BWP b of the carrier f of the serving cell c and the subcarrier spacing $\mu$. Here, $i_0$ may be such a minimum positive integer that causes $K_{SRS}(i - i_0) - 1$ symbols of the SRS transmission occasion i - $i_0$ to be earlier than $K_{SRS}(i)$ symbols of the SRS transmission occasion i.

If SRS transmission is aperiodic, $K_{SRS}(i)$ may be the number of symbols in the active UL BWP b of the carrier f of the serving cell c after the last symbol of a corresponding PDCCH triggering the SRS transmission and before the first symbol of the SRS transmission. If SRS transmission is semi-persistent or periodic, $K_{SRS}(i)$ may be the number of $K_{SRS,min}$ symbols equal to a product of the number of symbols $N_{symb}^{slot}$ per slot and a minimum value of a value provided by k2 in PUSCH common configuration information (PUSCH-ConfigCommon) in the active UL BWP b of the carrier f of the serving cell c.

(PUSCH Transmission Power Control)

In NR, transmission power of the PUSCH is controlled based on a TPC command (also referred to as a value, an increased or decreased value, a correction value, or the like) that is indicated by a value of a field (also referred to as a TPC command field or the like) in DCI.

For example, when the UE transmits the PUSCH on an active UL BWP b of a carrier f of a serving cell c using a parameter set (open loop parameter set) having an index j and an index l of a power control adjustment state (PUSCH power control adjustment state), transmission power ($P_{PUSCH,b,f,c}(i, j, q_d, l)$) [dBm] of the PUSCH in a PUSCH transmission occasion (also referred to as a transmission period or the like) i may be based on at least one of $P_{CMAX,f,c(i)}$, $P_{O\_PUSCH,b,f,c}(j)$, $M^{PUSCH}_{RB,b,f,c}(i)$, $\alpha_{b,f,c}(j)$, $PL_{b,f,c}(q_d)$, and $\Delta_{TF,b,f,c}(i)$, $f_{b,f,c}(i, l)$ as in the following expression.

$$P_{\text{PUSCH},b,f,c}(i, j, q_d, l)$$
$$= min \begin{cases} P_{\text{CMAX},f,c}(i), \\ P_{\text{O\_PUSCH},b,f,c}(j) + 10\,log_{10}(2^\mu \cdot M^{\text{PUSCH}}_{\text{RB},b,f,c}(i)) + \alpha_{b,f,c}(j) \cdot PL_{b,f,c}(q_d) \\ \qquad +\Delta_{\text{TF},b,f,c}(i) + f_{b,f,c}(i, l) \end{cases}$$

$$[\text{dBm}]$$
$$(E1)$$

The power control adjustment state may be referred to as a closed loop (CL)-power control (PC) state, a value based on a TPC command of the power control adjustment state index l, an accumulated value of TPC commands, or a value using a closed loop. l may be referred to as a closed loop index.

The PUSCH transmission occasion i is a period in which the PUSCH is transmitted, and may include, for example, one or more symbols, one or more slots, or the like.

$P_{CMAX,f,c}(i)$ is, for example, maximum transmission power (configured maximum output power, UE configured maximum output power) of a user terminal configured for the carrier f of the serving cell c in the transmission occasion i.

$P_{O\_PUSCH,b,f,c}(j)$ is, for example, a parameter related to target received power configured for the active UL BWP b of the carrier f of the serving cell c in the transmission occasion i (for example, also referred to as a parameter related to a transmission power offset, a transmission power offset P0, a target received power parameter, or the like). $P_{O\_UE\_PUSCH,b,f,c}(j)$ may be a sum of $P_{O\_NOMINAL\_PUSCH,f,c}(j)$ and $P_{O\_UE\_PUSCH,b,f,c}(j)$.

$M^{PUSCH}_{RB,b,f,c}(i)$ is, for example, the number of resource blocks (bandwidth) allocated to the PUSCH for the transmission occasion i in the active UL BWP b of the carrier f of the serving cell c and a subcarrier spacing $\mu$. $\alpha_{h,f,c}(j)$ is a value provided by a higher layer parameter (for example, also referred to as msg3-Alpha, p0-PUSCH-Alpha, a fractional factor, or the like).

$PL_{b,f,c}(q_d)$ is, for example, path loss (path loss estimation [dB], path loss compensation) calculated in the user terminal using an index $q_d$ of a reference signal (a reference signal (RS), a path loss reference RS, a pathloss (PL)-RS, an RS for path loss reference, a DL-RS for path loss measurement, PUSCH-PathlossReferenceRS) for a downlink BWP associated with the active UL BWP b of the carrier f of the serving cell c.

When the UE is not provided with the path loss reference RS (for example, PUSCH-PathlossReferenceRS) or the UE is not provided with a dedicated higher layer parameter, the UE may calculate $PL_{b,f,c}(q_d)$, using RS resources from a synchronization signal (SS)/physical broadcast channel (PBCH) block (SS block (SSB)) used for obtaining a Master Information Block (MIB).

When the UE is configured with as many RS resource indices as the number up to the value of a maximum number of path loss reference RSs (for example, maxNrofPUSCH-PathlossReferenceRSs) and a set of RS configurations respectively for the RS resource indices by the path loss reference RSs, the set of RS resource indices may include one or both of a set of SS/PBCH block indices and a set of channel state information (CSI)-reference signal (RS) resource indices. The UE may identify the RS resource indices $q_d$ in the set of RS resource indices.

When PUSCH transmission is scheduled by a Random Access Response (RAR) UL grant, the UE may use the same RS resource index $q_d$ as that for corresponding PRACH transmission.

When the UE is provided with configuration of power control of the PUSCH by a sounding reference signal (SRS) resource indicator (SRI) (for example, SRI-PUSCH-PowerControl) and is provided with one or more values of the IDs of the path loss reference RSs, the UE may obtain mapping between a set of values for an SRI field in DCI format 0_1 and a set of ID values of the path loss reference RSs from higher layer signaling (for example, sri-PUSCH-PowerControl-Id in SRI-PUSCH-PowerControl). The UE may determine the RS resource index $q_d$, based on the ID of the path loss reference RS mapped to the SRI field value in DCI format 0_1 for scheduling the PUSCH.

When PUSCH transmission is scheduled by DCI format 0_0, and the UE is not provided with PUCCH spatial relation information for a PUCCH resource having the lowest index for the active UL BWP b of each carrier f and the serving cell c, the UE may use the same RS resource index $q_d$ as that for PUCCH transmission in the PUCCH resource.

When PUSCH transmission is scheduled by DCI format 0_0, and the UE is not provided with a spatial setting of PUCCH transmission, or PUSCH transmission is scheduled by DCI format 0_1 not including the SRI field, or configuration of power control of the PUSCH by the SRI is not provided for the UE, the UE may use the RS resource index $q_d$ having the ID of the path loss reference RS of 0.

When a configured grant configuration (for example, ConfiguredGrantConfig) includes a specific parameter (for example, rrc-ConfiguredUplinkGrant) for PUSCH transmission that is configured by the configured grant configuration, the RS resource index $q_d$ may be provided for the UE by a path loss reference index (for example, pathlossReferenceIndex) in the specific parameter.

When the configured grant configuration does not include a specific parameter for PUSCH transmission that is configured by the configured grant configuration, the UE may determine the RS resource index $q_d$, based on the value of the ID of the path loss reference RS that is mapped to the SRI field in a DCI format for activating the PUSCH transmission. When the DCI format does not include the SRI field, the UE may determine the RS resource index $q_d$ having the ID of the path loss reference RS of 0.

$\Delta_{TF,b,f,c}(i)$ is a transmission power adjustment component (offset, transmission format compensation) for the UL BWP b of the carrier f of the serving cell c.

$f_{b,f,c}(i, l)$ is a PUSCH power control adjustment state for the active UL BWP b of the carrier f of the serving cell c in the transmission occasion i. $f_{b,f,c}(i, l)$ may be based on $\delta_{PUSCH,b,f,c}(i, l)$.

When TPC accumulation is enabled, $f_{b,f,c}(i, l)$ may be based on an accumulated value of $\delta_{PUSCH,b,f,c}(m, l)$.

When TPC accumulation is disabled, $f_{b,f,c}(i, l)$ may be $\delta_{PUSCH,b,f,c}(i, l)$ (absolute value).

When information (TPC-Accumulation) indicating disabled TPC accumulation is not configured (when information indicating disabled TPC accumulation is not provided, when TPC accumulation is configured to be enabled), the UE accumulates TPC command values and determines transmission power (applies the TPC command values through accumulation) based on accumulation results (power control state).

When the information (TPC-Accumulation) indicating disabled TPC accumulation is configured (when the information indicating disabled TPC accumulation is provided, when TPC accumulation is configured to be disabled), the UE does not accumulate TPC command values and determines transmission power based on the TPC command values (power control state) (applies the TPC command values without using accumulation).

$\delta_{PUSCH,b,f,c}(i, l)$ may be a TPC command value included in DCI format 0_0 or DCI format 0_1 for scheduling the PUSCH transmission occasion i on the active UL BWP b of the carrier f of the serving cell c, or a TPC command value coded by being combined with another TPC command in DCI format 2_2 having a CRC scrambled with a specific RNTI (Radio Network Temporary Identifier) (for example, a TPC-PUSCH-RNTI).

$\Sigma_{m=0}^{C(Di)-1}\delta_{PUCCH,b,f,c}(m, l)$ may be a sum of TPC command values in a set $D_i$ of TPC command values having a group/cardinality $C(D_i)$. $D_i$ may be a set of TPC command values received by the UE between $K_{PUSCH}(i - i_0) - 1$ symbols before a PUSCH transmission occasion $i - i_0$ and $K_{PUSCH}(i)$ symbols before a PUSCH transmission occasion i on the active UL BWP b of the carrier f of the serving cell c for the PUSCH power control adjustment state l. $i_0$ may be such a minimum positive integer that causes $K_{PUSCH}(i - i_0)$ symbols before the PUSCH transmission occasion $i - i_0$ to be earlier than $K_{PUSCH}(i)$ symbols before the PUSCH transmission occasion i.

If PUSCH transmission is scheduled by DCI format 0_0 or DCI format 0_1, $K_{PUSCH}(i)$ may be the number of symbols in the active UL BWP b of the carrier f of the serving cell c after the last symbol of corresponding PDCCH reception and before the first symbol of the PUSCH transmission. If PUSCH transmission is configured by configured grant configuration information (ConfiguredGrantConfig), $K_{PUSCH}(i)$ may be the number of $K_{PUSCH,min}$ symbols equal to a product of the number of symbols $N_{symb}^{slot}$ per slot and a minimum value of a value provided by k2 in PUSCH common configuration information (PUSCH-ConfigCommon) in the active UL BWP b of the carrier f of the serving cell c.

Whether the power control adjustment state has a plurality of states (for example, two states) or has a single state may be configured by a higher layer parameter. When a plurality of power control adjustment states are configured, one of the plurality of power control adjustment states may be identified by the index l (for example, $l \in \{0, 1\}$).

Transmission power of the PUCCH and transmission power of the SRS are also limited by the configured maximum output power $P_{CMAX,f,c}(i)$, similarly to the transmission power of the PUSCH.

(PUCCH Transmission Power Control)

In NR, transmission power of the PUCCH is controlled based on a TPC command (also referred to as a value, an increased or decreased value, a correction value, an indication value, or the like) that is indicated by a value of a certain field (also referred to as a TPC command field, a first field, or the like) in DCI.

For example, using the index l of the power control adjustment state, the transmission power ($P_{PUCCH,b,f,c}(i, q_u, q_d, l)$) of the PUCCH in the PUCCH transmission occasion (also referred to as a transmission period or the like) i regarding the active UL BWP b of the carrier f of the serving cell c may be expressed as in the following expression.

$$P_{\text{PUCCH}.b,f,c}(i, q_u, q_d, l)$$
$$= min \left\{ \begin{array}{l} P_{\text{CMAX},f,c}(i), \\ P_{\text{O\_PUCCH}.b,f,c}(q_u) + 10\,log_{10}(2^\mu \cdot M_{\text{RB}.b,f,c}^{\text{PUCCH}}(i)) + PL_{b,f,c}(q_d) \\ \qquad\qquad +\Delta_{\text{TF}.b,f,c}(i) + g_{b,f,c}(i, l) \end{array} \right\}$$

$$[\text{dBm}]$$
$$(\text{F1})$$

The power control adjustment state may be referred to as a PUCCH power control adjustment state, a first or second state, or the like.

The PUCCH transmission occasion i is a certain period in which the PUCCH is transmitted, and may include, for example, one or more symbols, one or more slots, or the like.

In Expression F1, $P_{CMAX,f,c}(i)$ is, for example, transmission power (also referred to as maximum transmission power, UE maximum output power, or the like) of a user terminal configured for the carrier f of the serving cell c in the transmission occasion i. $P_{O\_PUCCH,b,f,c}(q_u)$ is, for example, a parameter related to target received power configured for the active UL BWP b of the carrier f of the serving cell c in the transmission occasion i (for example, also referred to as a parameter related to a transmission power offset, a transmission power offset P0, a target received power parameter, or the like).

$M_{RB,b,f,c}^{PUCCH}(i)$ is, for example, the number of resource blocks (bandwidth) allocated to the PUCCH for the transmission occasion i in the active UL BWP b of the carrier f of the serving cell c and a subcarrier spacing $\mu$. $PL_{b,f,c}(q_d)$ is, for example, path loss calculated in the user terminal using the index $q_d$ of a reference signal (a path loss reference RS, a DL RS for path loss measurement, PUCCH-PathlossReferenceRS) for a downlink BWP associated with the active UL BWP b of the carrier f of the serving cell c.

$\Delta_{F\_PUCCH}(F)$ is a higher layer parameter given for each PUCCH format. $\Delta_{TF,b,f,c}(i)$ is a transmission power adjustment component (offset) for the UL BWP b of the carrier f of the serving cell c.

$g_{b,f,c}(i, l)$ is a value (for example, a power control adjustment state, an accumulated value of TPC commands, a value using a closed loop, a PUCCH power adjustment state) based on the TPC command of the power control adjustment state index l of the active UL BWP of the serving cell c and the carrier f of the transmission occasion i.

If the UE is provided with information (twoPUCCH-PC-AdjustmentStates) indicating use of two PUCCH power control adjustment states and the PUCCH spatial relation information (PUCCH-SpatialRelationInfo), l may be equal to {0, 1}, whereas if the UE is not provided with the information indicating use of two PUCCH power control adjustment states or the PUCCH spatial relation information, l may be equal to 0.

If the UE obtains a TPC command value from DCI format 1_0 or 1_1 and the UE is provided with the PUCCH spatial relation information, the UE may obtain mapping between a PUCCH spatial relation information ID (pucch-SpatialRelationInfoId) value and a closed loop index (closedLoopIndex, power adjustment state index l) by an index provided by a PUCCH P0 ID (p0-PUCCH-Id in p0-Set in PUCCH-PowerControl in PUCCH-Config). When the UE receives an activation command including the value of the PUCCH spatial relation information ID, the UE may determine the value of the closed loop index for providing the value of l via a link to a corresponding PUCCH P0 ID.

If the UE is provided with a configuration of a $P_{O\_PUCCH,b,f,c}(q_u)$ value for a corresponding PUCCH power adjustment state l for the active UL BWP b of the carrier f of the serving cell c by a higher layer, $g_{b,f,c}(i, l) = 0$ and $k = 0, 1, ..., i$. If the UE is provided with the PUCCH spatial relation information, the UE may determine the value of l from the value of $q_u$, based on the PUCCH spatial relation information associated with the PUCCH P0 ID corresponding to $q_u$ and the closed loop index value corresponding to l.

$q_u$ may be the PUCCH P0 ID (p0-PUCCH-Id) indicating a PUCCH P0 (P0-PUCCH) in a PUCCH P0 set (p0-Set).

(JT)

Joint transmission (JT) may mean simultaneous data transmission from a plurality of points (for example, TRPs) to a single UE.

Rel. 17 supports non-coherent joint transmission (NCJT) from two TRPs. PDSCHs from the two TRPs may be independently precoded and independently decoded. Frequency resources may not overlap (non-overlapping), may partially overlap (partial-overlapping), or may fully overlap (full-overlapping). When an overlap occurs, a PDSCH from one TRP interferes with a PDSCH from another TRP.

In Rel. 18, support of coherent joint transmission (CJT) using up to four TRPs is under study. Data from four TRPs may be coherently precoded and transmitted to the UE on the same time-frequency resource. For example, the same precoding matrix may be used in consideration of channels from four TRPs. "Coherent" may mean that phases of a plurality of received signals have a certain relationship with each other. With use of 4-TRP joint precoding, signal quality may be improved, and there may be no interference between the four TRPs. The data may be subject only to interference outside the four TRPs.

(Unified/Common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for the UL to all the UL channels while applying a common beam for the DL to all the DL channels.

One common beam for both the DL and the UL or a common beam for the DL and a common beam for the UL (two common beams in total) are studied.

The UE may assume the same TCI state (joint TCI state, joint TCI pool, joint common TCI pool, joint TCI state set) for the UL and the DL. The UE may assume different TCI states (separate TCI states, separate TCI pools, UL separate TCI pool and DL separate TCI pool, separate common TCI pools, UL common TCI pool and DL common TCI pool) respectively for the UL and the DL.

According to beam management based on a MAC CE (MAC CE level beam indication), default UL and DL beams may be aligned. A default TCI state of a PDSCH may be updated to match a default UL beam (spatial relation).

According to beam management based on DCI (DCI level beam indication), a common beam/unified TCI state may be indicated from the same TCI pool (joint common TCI pool, joint TCI pool, set) for both the UL and the DL. X (> 1) TCI states may be activated by a MAC CE. UL/DL DCI may select one from the X active TCI states. The selected TCI state may be applied to channels/RSs of both the UL and the DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N ($\geq$ 1) of TCI states (UL TCI states) applied to a UL channel/RS and the number M ($\geq$ 1) of TCI states (DL TCI states) applied to a DL channel/RS may be defined. At least one of N and M may be notified/configured/indicated for the UE via higher layer signaling/physical layer signaling.

In the present disclosure, description "N = M = X (X is any integer)" may mean that X TCI states (joint TCI states) (corresponding to X TRPs) common to the UL and the DL are notified/configured/indicated for the UE. Description "N = X (X is any integer) and M = Y (Y is any integer, Y may equal X)" may mean that X UL TCI states (corresponding to X TRPs) and Y DL TCI states (corresponding to Y TRPs) (i.e., separate TCI states) are each notified/configured/indicated for the UE.

For example, description "N = M = 1" may mean that one TCI state common to the UL and the DL for a single TRP is notified/configured/indicated for the UE (joint TCI state for a single TRP).

For example, description "N = 1 and M = 1" may mean that one UL TCI state and one DL TCI state for a single TRP are separately notified/configured/indicated for the UE (separate TCI state for a single TRP).

For example, description "N = M = 2" may mean that a plurality of (two) TCI states common to the UL and the DL for a plurality of (two) TRPs are notified/configured/indicated for the UE (joint TCI states for multiple TRPs).

For example, description "N = 2 and M = 2" may mean that a plurality of (two) UL TCI states and a plurality of (two) DL TCI states for a plurality of (two) TRPs are notified/configured/indicated for the UE (separate TCI states for multiple TRPs).

Note that, although the above examples have described cases in which the values of N and M are each 1 or 2, the values of N and M may each be 3 or greater, and N and M may be different from each other.

In Rel. 17, support of N = M = 1 is under study. In Rel. 18 or later versions, support of other cases is under study.

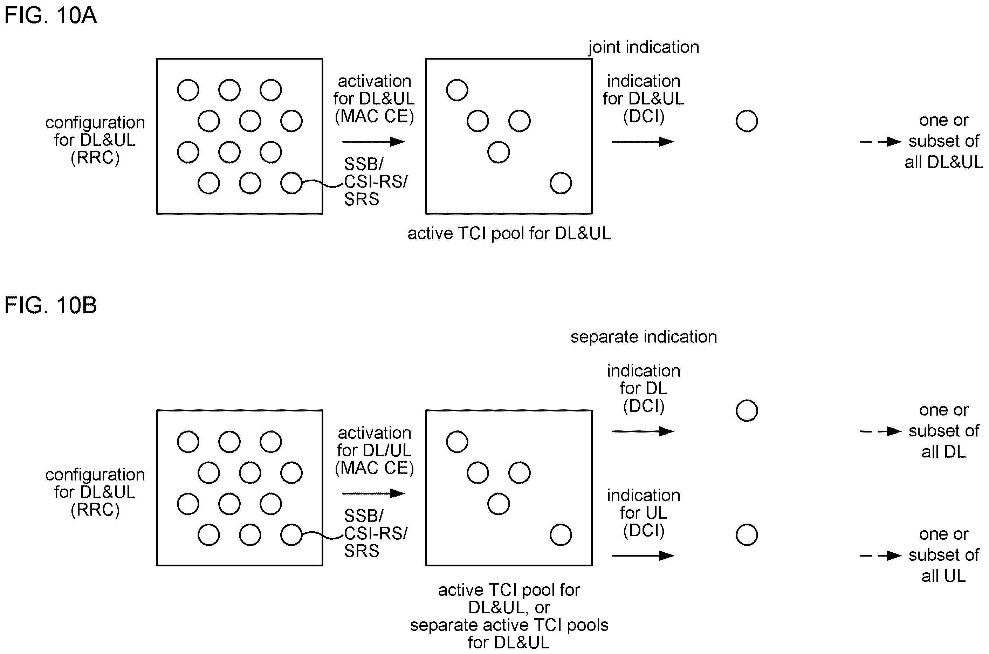

In the example of FIG. 10A, an RRC parameter (information element) configures a plurality of TCI states for both of the DL and the UL. A MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One DCI may indicate both a UL TCI and a DL TCI.

In the example of the figure, one dot may be one TCI state applied to both the UL and the DL or may be two respective TCI states applied to the UL and the DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information". In the present disclosure, one of a plurality of TCI states being indicated by using DCI may be receiving indication information indicating one of a plurality of TCI states included in DCI, or may simply be receiving "indication information".

In the example of FIG. 10B, an RRC parameter configures a plurality of TCI states for both the DL and the UL (joint common TCI pool). A MAC CE may activate a plurality of TCI states (active TCI pool) among the plurality of configured TCI states. Respective (different, separate) active TCI pools for the UL and the DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different DCIs may separately indicate a UL TCI and a DL DCI.

In Rel-17 NR (or later versions), it is assumed that beam activation/indication for TCI states associated with different physical cell identifiers (PCIs) is supported by a MAC CE/DCI. In Rel-18 NR (or later versions), it is assumed that indication of serving cell change for cells including different PCIs is supported by a MAC CE/DCI.

{Physical Layer Procedure/Antenna Port QCL for Data}

To provide a reference signal for a PDSCH DMRS and a PDCCH DMRS and a CSI-RS in a certain CC, and furthermore, to provide, if a UL TX (transmission) spatial filter for dynamic grant and configured grant-based PUSCH and PUCCH resources and an SRS in the certain CC is available, a reference for determination of the UL TCI filter, the UE can be configured with a list of up to 128 DLorJointTCIState (DL or joint TCI state) configurations in PDSCH-Config (PDSCH configuration).

If the configuration of DLorJointTCIState or UL-TCIState (UL TCI State) is absent in a BWP in the CC, the UE can apply the configuration of DLorJointTCIState or UL-TCIState from a reference BWP of a reference CC. If the UE is configured with DLorJointTCIState or UL-TCIState in any CC in the same band, the UE does not assume that TCI-State, SpatialRelationInfo (spatial relation information), and PUCCH-SpatialRelationInfo (PUCCH spatial relation information) excluding SpatialRelationInfoPos (spatial relation information for position) in the band are configured. The UE assumes that when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-Updated-List1-r16 (simultaneous spatial updated list 1), or simultaneousSpatial-UpdatedList2-r16 (simultaneous spatial updated list 2), the UE is not configured with DLorJointTCIState or UL-TCIState in any CC of the CCs.

The UE receives an activation command used to map up to eight TCI states and/or TCI state pairs with one TCI state for a DL channel/signal and one TCI state for a UL channel/signal to a DCI field 'Transmission Configuration Indication' (TCI) codepoint for one of CCs/DL BWPs or a set of CCs/DL BWPs, if available. When a set of TCI state IDs is activated for the set of CCs/DL BWPs, and furthermore, for one of the CCs/DL BWPs, if available, the same set of TCI state IDs is applied to all the DL and/or UL BWPs in an indicated CC. Here, an applicable list of CCs is determined by the CC indicated in the activation command. The UE applies the indicated DLorJointTCIState and/or UL-TCIState to one of the CCs/DL BWPs or a set of CCs/DL BWPs if the activation command maps DLorJointTCIState and/or UL-TCIState to only one TCI codepoint, and applies the indicated DLorJointTCIState and/or UL-TCIState to one of the CCs/DL BWPs or a set of CCs/DL BWPs if indicated mapping for one single TCI codepoint is applied.

When bwp-id or cell for a QCL type A/D source RS in QCL-Info with a TCI state with configured DLorJointTCIState is not configured, the UE assumes that the QCL type A/D source RS is configured in a CC/DL BWP to which the TCI state is applied.

(TCI State Indication)

A Rel-17 unified TCI framework supports the following modes 1 to 3.

{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

The UE with a TCI state configured and activated with a Rel-17 TCI state ID (for example, tci-StateId_r17) receives DCI format 1_1/1_2 for providing an indicated TCI state with the Rel-17 TCI state ID for one CC, or receives DCI format 1_1/1_2 for providing an indicated TCI state with the Rel-17 TCI state ID, for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be accompanied by DL assignment, if available, or may not be accompanied by DL assignment.

If DCI format 1_1/1_2 is not accompanied by DL assignment, the UE can assume (validate) the following for the DCI.

- A CS-RNTI is used to scramble a CRC for the DCI.
- Values of the following DCI fields (special fields) are set as follows:

  - redundancy version (RV) fields are all '1's
  - modulation and coding scheme (MCS) fields are all '1's
  - new data indicator (NDI) field is 0
  - frequency domain resource assignment (FDRA) fields are all '0's for FDRA type 0, are all '1's for FDRA type 1, or are all '0's for dynamic switching (DynamicSwitch) (as with validation of a PDCCH with a DL semi-persistent scheduling (SPS) release or a UL grant type 2 scheduling release).

Note that the DCI in mode 2/mode 3 may be referred to as beam indication DCI.

In Rel. 15/16, if the UE does not support active BWP change via DCI, the UE ignores a BWP indicator field. Such operation is also under study for a relationship between support of a Rel-17 TCI state and interpretation of a TCI field. It is studied that, if the UE is configured with the Rel-17 TCI state, the TCI field is always present in DCI format 1_1/1_2 and, if the UE does not support TCI update via DCI, the UE ignores the TCI field.

In Rel. 15/16, whether the TCI field is present (TCI-in-DCI presence information, "tci-PresentInDCI") is configured for each CORESET.

The TCI field in DCI format 1_1 is 0 bits in a case in which a higher layer parameter "tci-PresentInDCI" is not enabled, otherwise 3 bits. If the BWP indicator field indicates a BWP other than an active BWP, the UE follows the following operation. {Operation} If the higher layer parameter "tci-PresentInDCI" is not enabled for a CORESET used for a PDCCH for communicating the DCI format 1_1, the UE assumes that "tci-PresentInDCI" is not enabled for all the CORESETs in the indicated BWP, otherwise the UE assumes that "tci-PresentInDCI" is enabled for all the CORESETs in the indicated BWP.

The TCI field in DCI format 1_2 is 0 bits in a case in which a higher layer parameter "tci-PresentInDCI-1-2" is not configured, otherwise 1, 2, or 3 bits determined by the higher layer parameter "tci-PresentInDCI-1-2". If the BWP indicator field indicates a BWP other than an active BWP, the UE follows the following operation.

{Operation} If the higher layer parameter "tci-PresentInDCI-1-2" is not configured for a CORESET used for a PDCCH for communicating the DCI format 1_2, the UE assumes that "tci-PresentInDCI" is not enabled for all the CORESETs in the indicated BWP, otherwise the UE assumes that "tci-PresentInDCI-1-2" is configured with the same value as that of "tci-PresentInDCI-1-2" configured for the CORESET used for the PDCCH for communicating the DCI format 1_2 for all the CORESETs in the indicated BWP.

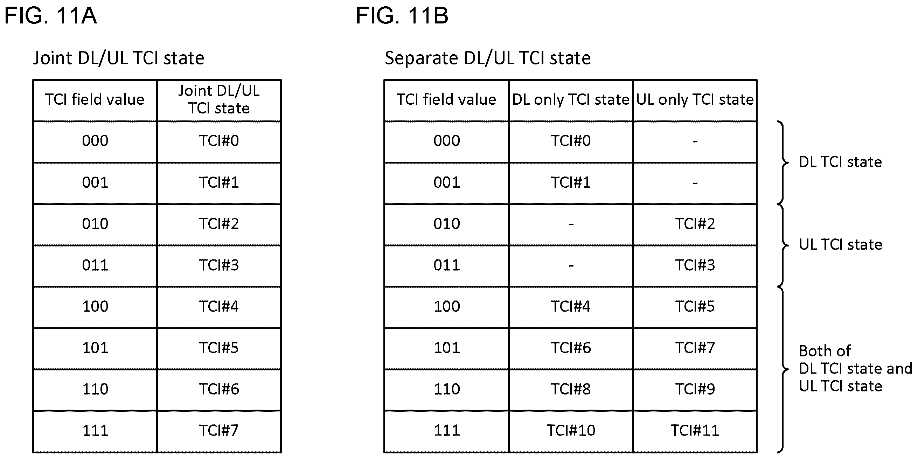

FIG. 11A shows an example of DCI based joint DL/UL TCI state indication. A TCI state ID indicating a joint DL/UL TCI state is associated with a TCI field value for the joint DL/UL TCI state indication.

FIG. 11B shows an example of DCI based separate DL/UL TCI state indication. At least one of a TCI state ID indicating a DL only TCI state and a TCI state ID indicating a UL only TCI state is associated with a TCI field value for the separate DL/UL TCI state indication. In this example, TCI field values "000" to "001" are associated with only one TCI state ID for the DL, TCI field values "010" to "011" are associated with only one TCI state ID for the UL, and TCI field values "100" to "111" are associated with both one TCI state ID for the DL and one TCI state ID for the UL.

(Indicated TCI State/Configured TCI State)

For the Rel-17 TCI state, a unified/common TCI state may mean a Rel-17 TCI state indicated by using DCI/MAC CE/RRC (of Rel. 17) (indicated Rel-17 TCI state).

In the present disclosure, an indicated Rel-17 TCI state, an indicated TCI state, a unified/common TCI state, a TCI state applied to a plurality of types of signals (channels/RSs), and a TCI state for a plurality of types of signals (channels/RSs) may be interchangeably interpreted.

The indicated Rel-17 TCI state may be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. A TCI state indicated by DCI/MAC CE/RRC may be referred to as an indicated TCI state or a unified TCI state.

For the Rel-17 TCI state, a TCI state other than the unified TCI state may mean a Rel-17 TCI state configured by using a MAC CE/RRC (of Rel. 17) (configured Rel-17 TCI state). In the present disclosure, a configured Rel-17 TCI state, a configured TCI state, a TCI state other than the unified TCI state, and a TCI state applied to a signal (channel/RS) of a specific type may be interchangeably interpreted.

The configured Rel-17 TCI state may not be shared with at least one of UE-specific reception in a PDSCH/PDCC (updated by using DCI/MAC CE/RRC of Rel. 17), a dynamic grant (DCI)/configured grant PUSCH, and a plurality of (for example, all the) dedicated PUCCH resources. The configured Rel-17 TCI state may be configured by RRC/MAC CE for each CORESET/each resource/each resource set, and may not be updated even when the above-described indicated Rel-17 TCI state (common TCI state) is updated.

It is studied that the indicated Rel-17 TCI state is applied to a UE-specific channel/signal (RS). It is studied to notify, using higher layer signaling (RRC signaling), the UE of which of the indicated Rel-17 TCI state and the configured Rel-17 TCI state is to be applied to a non-UE-specific channel/signal.

It is studied that an RRC parameter related to the configured Rel-17 TCI state (TCI state ID) has the same configuration as that of an RRC parameter related to a TCI state in Rel. 15/16. It is studied that the configured Rel-17 TCI state is configured/indicated for each CORESET/each resource/each resource set by using RRC/MAC CE. It is studied that the UE determines the configuration/indication, based on a specific parameter.

It is studied that, for the UE, update of the indicated TCI state and update of the configured TCI state are separately performed. For example, when the unified TCI state for the indicated TCI state is updated for the UE, the configured TCI state may not be updated. It is studied that the UE determines the update, based on a specific parameter.

It is studied that, for a PDCCH/PDSCH, switching between application of the indicated Rel-17 TCI state and non-application of the indicated Rel-17 TCI state (application of the configured Rel-17 TCI state, application of the TCI state configured separately from the indicated Rel-17 TCI state) is performed by using higher layer signaling (RRC/MAC CE).

For intra-cell beam indication (TCI state indication), it is studied that the indicated Rel-17 TCI state is supported for a UE-specific CORESET and a PDSCH associated with the CORESET and for a non-UE-specific CORESET and a PDSCH associated with the CORESET.

For inter-cell beam indication (for example, L1/L2 inter-cell mobility), it is studied that the indicated Rel-17 TCI state is supported for a UE-specific CORESET and a PDSCH associated with the CORESET.

In Rel. 15, whether the TCI state is indicated for CORESET #0 depends on base station implementation. In Rel. 15, for CORESET #0 for which the TCI state is indicated, the indicated TCI state is applied. For CORESET #0 for which the TCI state is not indicated, an SSB and QCL selected in the latest (most recent) PRACH transmission are applied.

For the unified TCI state framework of Rel. 17 (or later versions), the TCI state related to CORESET #0 is under study.

For example, in the unified TCI state framework of Rel. 17 (or later versions), for Rel-17 TCI state indication for CORESET #0, whether to apply the indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS associated with the Rel-17 TCI state applied to CORESET #0 may be quasi-co-located with an SSB associated with a serving cell PCI (physical cell ID) (in a manner similar to that of Rel. 15).

For CORESET #0, a CORESET with a common search space (CSS), and a CORESET with a CSS and a UE-specific search space (USS), whether each CORESET follows the indicated Rel-17 TCI state may be configured by an RRC parameter. When the CORESET is not configured to follow the indicated Rel-17 TCI state, the configured Rel-17 TCI state may be applied to the CORESET.

For non-UE-dedicated channels/RSs (excluding CORESETs), whether each channel/resource/resource set follows the indicated Rel-17 TCI state may be configured by an RRC parameter. When the channel/resource/resource set is not configured to follow the indicated Rel-17 TCI state, the configured Rel-17 TCI state may be applied to the channel/resource/resource set.

(Channel/RS to Which Indicated TCI State Is Applied)

The indicated TCI state with a MAC CE/DCI may be applied to the following channels/RSs.

{PDCCH}

- When followUnifiedTCIState is configured (unified TCI state is configured to be followed) for CORESET 0, the indicated TCI state is applied to the CORESET. Otherwise, a Rel-15 specification is applied to the CORESET. In other words, CORESET 0 follows the TCI state activated by a MAC CE, or is quasi-co-located with an SSB.
- The indicated TCI state is always applied to a CORESET with USS/CSS type 3 and with an index other than index 0.
- When the unified TCI state is configured to be followed for a CORESET with at least a CSS of a type other than CSS type 3 and with an index other than index 0, the indicated TCI state is applied to the CORESET. Otherwise, the configured TCI state for the CORESET is applied to the CORESET.

{PDSCH}

- The indicated TCI state is always applied to all the UE-dedicated PDSCHs.
- When followUnifiedTCIState is configured for a non-UE-dedicated PDSCH (PDSCH scheduled by DCI in a CSS) (for a CORESET of a PDCCH for scheduling the PDSCH), the indicated TCI state may be applied to the PDSCH. Otherwise, the configured TCI state for the PDSCH is applied to the PDSCH. When followUnifiedTCIState is not configured for a PDSCH, whether a non-UE-dedicated PDSCH follows the indicated TCI state may be determined depending on whether followUnifiedTCIState is configured for a CORESET used to schedule the PDSCH.

{CSI-RS}

- When followUnifiedTCIState is configured for an A-CSI-RS for CSI acquisition or beam management (for a CORESET of a PDCCH for triggering the A-CSI-RS), the indicated TCI state is applied to the A-CSI-RS. The configured TCI state for the CSI-RS is applied to another CSI-RS.

{PUCCH}

- The indicated TCI state is always applied to all the dedicated PUCCH resources.

{PUSCH}

The indicated TCI state is always applied to a dynamic/configured grant PUSCH.

{SRS}

- When the unified TCI state is configured to be followed for an SRS resource set for an A-SRS for beam management use and an A/SP/P-SRS for codebook (CB)/non-codebook (NCB)/antenna switching use, the indicated TCI state is applied to the SRS resource set. The configured TCI state in the SRS resource set is applied to another SRS.

(Analysis)

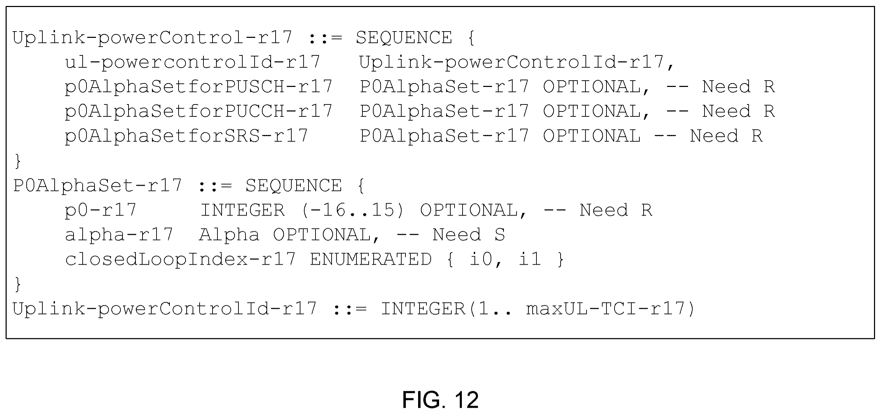

As described above, $P_{O\_SRS}$ ($P_{O\_SRS,b,f,c}(q_s)$ in the above) is provided by p0 for the active UL BWP b of the carrier f of the serving cell c and the SRS resource set $q_s$ (provided by SRS-ResourceSet and SRS-ResourceSetId).
In existing specifications (up to Rel. 17), p0 is provided using an integer of -202 to 24 in an SRS configuration (RRC information element SRS-Config).
Basically, $P_{O\_SRS}$ includes only absolute target power [dBm] for each SRS configuration.
As described above, $P_{O\_PUSCH}$ ($P_{O\_PUSCH,b,f,c}(j)$ in the above) is a parameter including the sum of $P_{O\_NOMINAL\_PUSCH}$ ($P_{O\_NOMINAL\_PUSCH,f,c}(j)$ in the above) and $P_{O\_UE\_PUSCH}$ ($P_{O\_UE\_PUSCH,b,f,c}(j)$ in the above).
In the PUSCH scheduled by a dynamic grant (a DG, for example, DCI), $P_{O\_NOMINAL\_PUSCH}$ is provided by an RRC parameter "p0-NominalWithGrant", and $P_{O\_UE\_PUSCH}$ is provided by "p0" in an RRC parameter "P0-PUSCH-AlphaSet".
In existing specifications (up to Rel. 17), the "p0-NominalWithGrant" is provided using an integer of -202 to 24, and the "p0" is provided using an integer of -16 to 15.
In principle, $P_{O\_PUSCH}$ includes absolute target power [dBm] for each cell and differential power [dB] for each BWP for each cell.
In Rel. 17, when an RRC parameter (for example, TCI-State in dl-OrJointTCI-Statelist, or TCI-UL-State) related to the unified TCI state is configured for the UE, an RRC parameter for UL power control (Uplink-powerControl-r17) is included in the RRC parameter (see FIG. 12).
The RRC parameter for UL power control (Uplink-powerControl-r17) includes at least one of a UL power control ID (ul-power controlId-r17), a power control parameter for a PUSCH (p0AlphaSetforPUSCH-r17), a power control parameter for a PUCCH (p0AlphaSetforPUCCH-r17), and a power control parameter for an SRS (p0AlphaSetforSRS-r17) (see FIG. 12).
The power control parameter for the PUSCH (p0AlphaSetforPUSCH), the power control parameter for the PUCCH (p0AlphaSetforPUCCH), and the power control parameter for the SRS (p0AlphaSetforSRS) each refer to a parameter (P0AlphaSet-r17) related to a set of p0 and $\alpha$.
The parameter (P0AlphaSet-r17) related to the set of p0 and $\alpha$ includes at least one of a parameter indicating p0 (p0-r17), a parameter indicating $\alpha$ (alpha-r17), and a parameter indicating a power control adjustment state index (closedLoopIndex-r17).
When the joint/UL TCI state is indicated for the UE, update/change to a transmission power control parameter corresponding to the indicated TCI state is performed.
In Rel. 18 or later versions, for example, it is studied that, for the PUSCH, $P_{O\_UE\_PUSCH}$ (differential power) is changed according to the indicated TCI state.
In Rel. 18 or later versions, for example, it is studied that, for the PUCCH, $P_{O\_PUCCH}$ (absolute power) is changed according to the indicated TCI state. Note that $P_{O\_PUCCH}$ may be defined as the sum of $P_{O\_NOMINAL\_PUCCH}$ and $P_{O\_UE\_PUCCH}$. When $P_{O\_PUCCH}$ (absolute power) is changed, it is preferable that $P_{O\_UE\_PUCCH}$ be changed.
In Rel. 18 or later versions, for example, it is studied that, for the SRS, $P_{O\_SRS}$ (absolute power) is changed according to the indicated TCI state.
For the PUSCH/PUCCH/SRS, a plurality of sets including at least one of the following parameters may be configured:

- P0 (absolute power [dBm]/differential power [dB])
- closed loop state (power control adjustment state, l)
- path loss RS (SSB or CSI-RS)
- $\alpha$

In Rel. 17, in the unified TCI state framework, the RRC parameter for UL power control (Uplink-powerControl-r17) may be referred to for all the PUSCH/PUCCH/SRS (see FIG. 12).

For example, in a case of the SRS, it is considered that p0 is absolute power indicated with an integer value within a range of -202 to 24, whereas p0 updated by the indicated TCI state is differential power indicated with an integer value within a range of -16 to 15.

In other words, introducing the unified TCI state significantly reduces the range of updated p0 compared to the range of configured (original) p0, and thus update of the transmission power parameter for the SRS (for example, p0) may not be appropriately performed.

It is considered that problems similar to these may also occur in other UL signals (for example, the PUSCH/-PUCCH).

In other words, studies have not been sufficiently carried out on whether configuration/update of the transmission power parameter in the unified TCI state framework is based on absolute power or is based on differential power for a UL signal.

Unless the studies are sufficiently carried out, configuration/update of the transmission power parameter in the unified TCI state framework cannot be appropriately performed, and this may cause reduction in communication quality/throughput.

In view of this, the inventors of the present invention came up with the idea of a power control method for a UL signal.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C".

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, $a_b$, a_b, and a notation in which b is attached to a at the lower right may be interchangeably interpreted. In the present disclosure, $a^c$, a^c, and a notation in which c is attached to a at the upper right may be interchangeably interpreted. In the present disclosure, $a_b{}^c$, a_b^c, and a notation in which b is attached to a at the lower right and c is attached thereto at the upper right may be interchangeably interpreted. In the present disclosure, ceil(x) and a ceiling function may be interchangeably interpreted. In the present disclosure, floor(x) and a floor function may be interchangeably interpreted.

(Radio Communication Method)

In each embodiment, an SRS, a P-SRS, an SP-SRS, and an A (AP)-SRS may be interchangeably interpreted. In the present disclosure, an SRS resource, an SRS resource set, and an SRS resource set group may be interchangeably interpreted.

In each embodiment, a TRP, a TRP ID, an ID configured by a higher layer, a configurable index, a specific index, a TRP index, a panel index, an index introduced for CJT, an antenna port index, an RS (SRS) port index, a CORESET pool index, a position of a TCI state, an ID configured by higher layer signaling, and an SRS resource set may be interchangeably interpreted.

In each embodiment, a set of power control parameters may include at least one of the following several parameters/pieces of information.

- P0 (P0_SRS)
- closed loop state (power control adjustment state, I) index

- path loss RS (SSB or CSI-RS)
- $\alpha$ (path loss compensation coefficient for UL power control)

In each embodiment, a configuration, an SRS configuration, an SRS resource set configuration, and an SRS resource configuration may be interchangeably interpreted.

In the present disclosure, a unified TCI state, an indicated TCI state, a joint TCI state, a UL TCI state, a DL TCI state, an indicated joint TCI state, an indicated UL TCI state, an indicated DL TCI state, and a TCI state may be interchangeably interpreted. The unified TCI state in the present disclosure may be a Rel-17 unified TCI state, may be a Rel-18 unified TCI state, or may be a Rel-X (X is any number) unified TCI state.

While a specific UL signal (for example, an SRS/PUCCH/PUSCH) will be described as an example below in each embodiment of the present disclosure, the SRS, the PUCCH, and the PUSCH may be interchangeably interpreted. In other words, each embodiment of the present disclosure is applicable not only to a described UL signal but also to an SRS/PUCCH/PUSCH as appropriate.

<First Embodiment>

For the UE, the set (for example, p0AlphaSetforSRS) of transmission power control parameters for the SRS related to the unified TCI state may be configured/indicated.

The transmission power control parameters may be at least one of the parameter (for example, p0-r17) related to the transmission power offset (for example, p0) and the parameter (for example, alpha-r17) indicating the path loss compensation coefficient for UL power control (for example, $\alpha$), for example.

Note that the names of the RRC parameters in the present disclosure are merely examples, and are not limited to the illustrated examples. "-rXX" added to an RRC parameter may mean a parameter defined in Rel. XX, or may mean an extended parameter of a parameter defined in Rel. XX. "-rXX" added to an RRC parameter may be omitted.

The transmission power control parameters may be transmission power control parameters used in configuration/indication/update of the unified TCI state (indicated TCI state).

The transmission power control parameters may be indicated with absolute power, for example.

The transmission power control parameters may be indicated in a first range, for example.

The first range may be indicated in a range (for example, a range of -202 to 24) indicating absolute power, for example.

A first embodiment is broadly divided into the following options 1-1 to 1-4. The UE/NW may follow one of options 1-1 to 1-4, or may follow a combination of at least two of options 1-1 to 1-4.

<<Option 1-1>>

For example, the range of the parameter (for example, p0-r17) related to the transmission power offset (for example, p0) defined in Rel. 17 may be extended.

The transmission power control parameter defined in a first range may be only a transmission power control parameter for a specific UL signal (for example, an SRS), for example. For example, the transmission power control parameter for a signal (for example, a PUSCH/PUCCH) other than the specific UL signal may be indicated in a second range (for example, a range of -16 to 15) that is narrower/smaller than the first range.

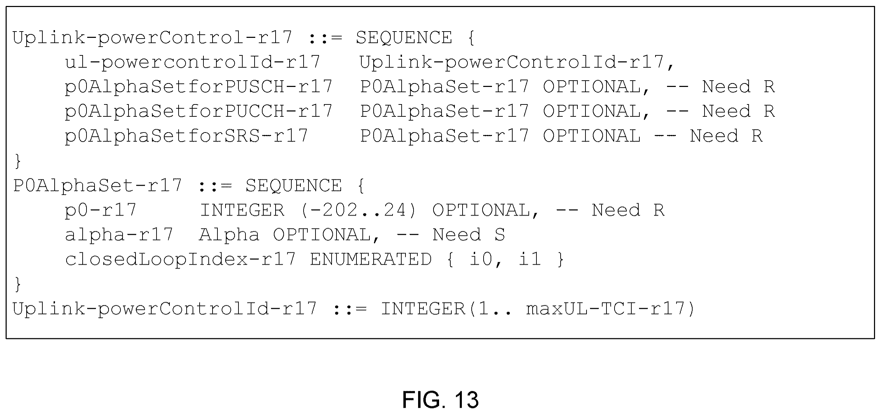

FIG. 13 is a diagram to show an example of transmission power parameters according to option 1-1. In the example shown in FIG. 13, in the set of p0 and $\alpha$ (P0AlphaSet-r17) referred to by the transmission power control parameter for the SRS (p0AlphaSetforSRS-r17) included in the UL power control parameter (Uplink-powerControl-r17), the parameter indicating p0 is indicated in the range of -202 to 24.

<<Option 1-2>>

For example, separately from a second transmission power control parameter (for example, the parameter (for example, p0-r17) related to the transmission power offset (for example, p0) defined in Rel. 17), a first transmission power control parameter (for example, the transmission power control parameter indicated in the first range (a new RRC parameter, which may be expressed as p0-r17xx as an example)) may be configured/defined.

The second transmission power control parameter may be indicated in the second range. The second range may be a range (for example, a range of -16 to 15) that is narrower/smaller than the first range, for example. The first transmission power control parameter may be indicated with differential power.

The UE may determine the transmission power control parameter to be used for transmission power control for the SRS, based on a configuration of the first transmission power control parameter and a configuration of the second transmission power control parameter.

For example, when only the first transmission power control parameter is configured for the UE, the UE may use the first transmission power control parameter as the transmission power control parameter to be used for transmission power control for the SRS.

For example, when only the second transmission power control parameter is configured for the UE, the UE may use the second transmission power control parameter as the transmission power control parameter to be used for transmission power control for the SRS.

For example, when the first transmission power control parameter and the second transmission power control parameter are configured for the UE, the UE may determine that only the first (or second) transmission power control parameter is to be used for transmission power control for the SRS.

The first transmission power control parameter (for example, the new RRC parameter) may be configured only for the SRS (for example, the transmission power control parameter for the SRS (p0AlphaSetforSRS-r17)). The first transmission power control parameter (for example, the new RRC parameter) may be available only for the SRS (for example, the transmission power control parameter for the SRS (p0AlphaSetforSRS-r17)).

For example, for a UL signal other than the SRS (for example, the transmission power control parameter for the PUSCH (p0AlphaSetforPUSCH-r17)/transmission power control parameter for the PUCCH (p0AlphaSetforPUCCH-r17)), even if the first transmission power control parameter (for example, the new RRC parameter) is configured (is present), an existing transmission power control parameter (second transmission power control parameter) may be used.

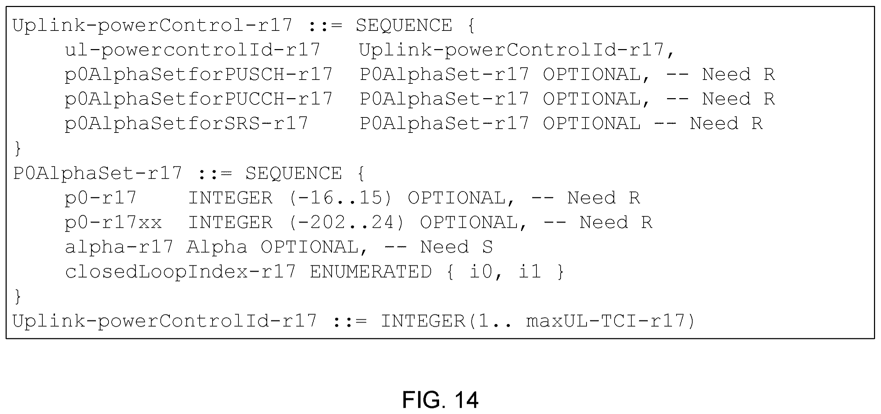

FIG. 14 is a diagram to show an example of transmission power parameters according to option 1-2. In the example shown in FIG. 14, in the set of p0 and $\alpha$ (P0AlphaSet-r17) referred to by the transmission power control parameter for the SRS (p0AlphaSetforSRS-r17) included in the UL power control parameter (Uplink-powerControl-r17), the parameter indicating p0 (p0-r17) indicated with differential power and the parameter indicating p0 (p0-r17xx) indicated with absolute power are included. The parameter indicating p0 (p0-r17) indicated with differential power is indicated in the range of -16 to 15, and the parameter indicating p0 (p0-r17xx) indicated with absolute power is indicated in the range of -202 to 24.

<<Option 1-3>>

For example, at least one of a first set (for example, P0AlphaSet-r17xx) of transmission power control parameters for the SRS including the first transmission power control parameter (for example, the transmission power control parameter (for example, p0-r17/p0-r17xx) indicated in the first range) and a second set (for example, P0AlphaSet-r17) of transmission power control parameters for the SRS including the second transmission power control parameter (for example, the parameter (for example, p0-r17) related to the transmission power offset (for example, p0) defined in Rel. 17) may be defined/configured in the UL power control parameter (for example, Uplink-powerControl-r17).

The first transmission power control parameter may be indicated in the first range (for example, the range of -202 to 24), and the second transmission power control parameter may be indicated in a range of the second range (for example, -16 to 15).

The UE may determine the transmission power control parameter to be used for transmission power control for the SRS, based on a configuration of the first set of the transmission power control parameters for the SRS and a configuration of the second set of the transmission power control parameters for the SRS.

For example, when only the first set of the transmission power control parameters for the SRS is configured for the UE, the UE may use the transmission power control parameter included in the first set of the transmission power control parameters for the SRS as the transmission power control parameter to be used for transmission power control for the SRS.

For example, when only the second set of the transmission power control parameters for the SRS is configured for the UE, the UE may use the transmission power control parameter included in the second set of the transmission power control parameters for the SRS as the transmission power control parameter to be used for transmission power control for the SRS.

For example, when the first set of the transmission power control parameters for the SRS and the second set of the transmission power control parameters for the SRS are configured for the UE, the UE may determine that only the transmission power control parameter included in the first (or second) set of the transmission power control parameters for the SRS is to be used for transmission power control for the SRS.

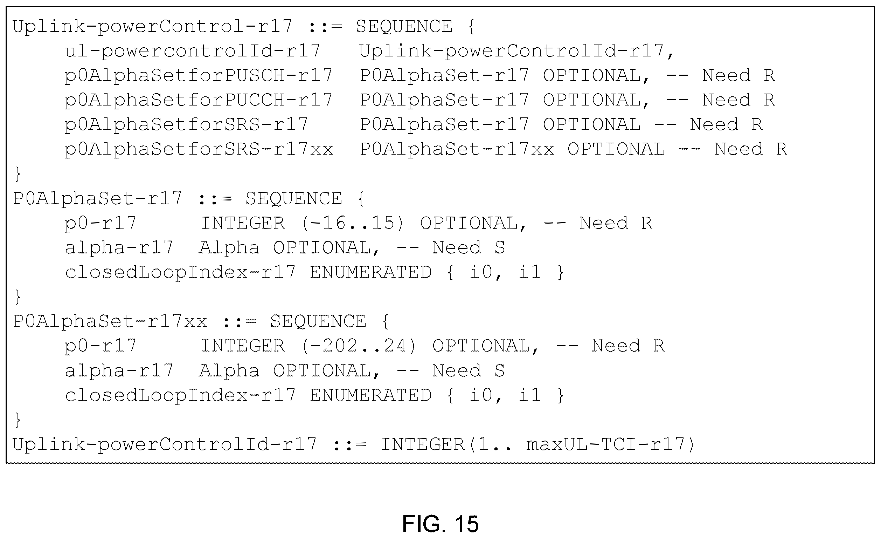

FIG. 15 is a diagram to show an example of transmission power parameters according to option 1-3. In the example shown in FIG. 15, in the UL power control parameter (Uplink-powerControl-r17), at least one of P0AlphaSet-r17 and P0AlphaSet-r17xx is included.

In the example shown in FIG. 15, in P0AlphaSet-r17, the parameter indicating p0 (p0-r17) indicated in the range of -16 to 15 is included, and in P0AlphaSet-r17xx, the parameter indicating p0 (p0-r17) indicated in the range of -202 to 24 is included.

<<Option 1-4>>

For example, the transmission power control parameter indicated in the first range may be indicated by a combination of the transmission power control parameter indicated in the second range (for example, the second transmission power control parameter (for example, the parameter (for example, p0-r17) related to the transmission power offset (for example, p0) defined in Rel. 17)) and a specific RRC parameter (which may be expressed as p0-r17xx, for example).

The transmission power control parameter indicated in the first range may be notified/defined using X bits (for example, 8 bits), for example. The transmission power control parameter indicated in the second range may be notified/defined using Y bits (for example, 5 bits), for example.

The specific RRC parameter may be notified/defined using Z bits (for example, 3 bits), for example. For example, regarding Z, Z = X - Y may hold.

The UE may determine the specific RRC parameter as a bit (for example, the most significant bit (MSB)/least significant bit (LSB)) of the transmission power control parameter indicated in the first range at a specific position.

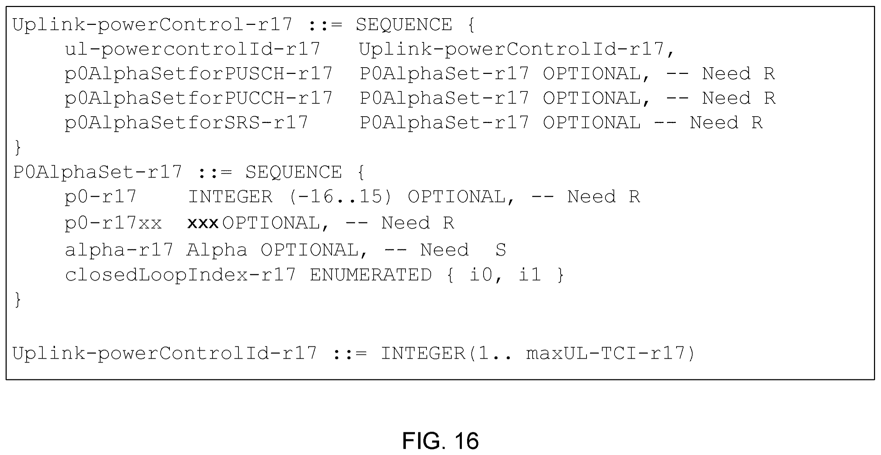

FIG. 16 is a diagram to show an example of transmission power parameters according to option 1-4. In the example shown in FIG. 16, in the set of p0 and $\alpha$ (P0AlphaSet-r17) referred to by the transmission power control parameter for the SRS (p0AlphaSetforSRS-r17) included in the UL power control parameter (Uplink-powerControl-r17), the transmission power control parameter indicated in the second range (p0-r17) and a specific RRC parameter (p0-r17xx) are included.

The UE determines a combination of the transmission power control parameter indicated in the second range (p0-r17) and the specific RRC parameter (p0-r17xx) as the transmission power control parameter indicated in the first range.

According to the first embodiment described above, influence on procedures in the physical layer for transmission power control for the SRS based on the unified TCI state defined in existing specifications can be relatively reduced, and transmission power control can be appropriately performed.

<Second Embodiment>

For the UE, the set (for example, p0AlphaSetforSRS) of transmission power control parameters for the SRS related to the unified TCI state may be configured/indicated.

The transmission power control parameters may be at least one of the parameter (for example, p0-r17) related to the transmission power offset (for example, p0) and the parameter (for example, alpha-r17) indicating the path loss compensation coefficient for UL power control (for example, $\alpha$), for example.

The transmission power control parameters may be transmission power control parameters used in configuration/indication/update of the unified TCI state (indicated TCI state).

The transmission power control parameters may be indicated with differential power, for example.

The UE may calculate/determine the transmission power for the SRS (for example, $P_{SRS}$), based on the first transmission power control parameter (for example, p0) provided by specific higher layer parameters (for example, the parameter of the SRS resource set (for example, SRS-ResourceSet) and the SRS resource set ID (for example, SRS-ResourceSetId)) and the second transmission power control parameter (for example, p0-r17) applied by the transmission power control parameters for the SRS (for example, p0AlphaSetforSRS) associated with the indicated TCI state (joint/UL TCI state).

A second embodiment is broadly divided into the following options 2-1 (including a variation) to 2-3. The UE/NW may follow one of options 2-1 to 2-3, or may follow a combination of at least two of options 2-1 to 2-3.

<<Option 2-1>>

For the UE, the RRC parameter (for example, TCI-State in dl-OrJointTCI-StateList, or TCI-UL-State) related to the unified TCI state may be configured.

In this case, the UE may calculate the sum of the first transmission power control parameter (for example, p0) provided by specific higher layer parameters (for example, the parameter of the SRS resource set (for example, SRS-ResourceSet) and the SRS resource set ID (for example, SRS-ResourceSetId)) and the second transmission power control parameter (for example, p0-r17) applied by the transmission power control parameters for the SRS (for example, p0AlphaSetforSRS) associated with the indicated TCI state (joint/UL TCI state) as $P_{O\_SRS,b,f,c}(q_s)$.

When the RRC parameter related to the unified TCI state is not configured, the UE may calculate $P_{O\_SRS,b,f,c}(q_s)$, based on the first transmission power control parameter (for example, p0) provided by the specific higher layer parameters (for example, the parameter of the SRS resource set (for example, SRS-ResourceSet) and the SRS resource set ID (for example, SRS-ResourceSetId)).

$P_{O\_SRS,b,f,c}(q_s)$ may be $P_0$ in the active UL BWP b of the carrier f of the serving cell c for the SRS resource set ($q_s$).

<<Variation of Option 2-1>>

For the UE, an RRC parameter (for example, followUnifiedTCIState-r17/followUnifiedTCI-StateSRS-r17) indicating following the unified TCI state need not be configured.

For the UE, the RRC parameter (for example, TCI-State in dl-OrJointTCI-StateList, or TCI-UL-State) related to the unified TCI state may be configured.

In this case, the UE may calculate the sum of the first transmission power control parameter (for example, p0) provided by specific higher layer parameters (for example, the parameter of the SRS resource set (for example, SRS-ResourceSet) and the SRS resource set ID (for example, SRS-ResourceSetId)) and, if available, the second transmission power control parameter (for example, p0-r17) applied by the transmission power control parameters for the SRS (for example, p0AlphaSetforSRS) associated with the indicated TCI state (joint/UL TCI state) as $P_{O\_SRS,b,f,c}(q_s)$.

When the RRC parameter related to the unified TCI state is not configured, the UE may calculate $P_{O\_SRS,b,f,c}(q_s)$, based on the first transmission power control parameter (for example, p0) provided by the specific higher layer parameters (for example, the parameter of the SRS resource set (for example, SRS-ResourceSet) and the SRS resource set ID (for example, SRS-ResourceSetId)).

$P_{O\_SRS,b,f,c}(q_s)$ may be $P_0$ in the active UL BWP b of the carrier f of the serving cell c for the SRS resource set ($q_s$).

<<Option 2-2>>

The UE may add a specific term (for example, $P_{O\_UE\_SRS}$) in calculation (for example, the above expression D1) of the transmission power for the SRS.

The specific term may be configured/provided using the second transmission power control parameter (for example, p0-r17) applied by the transmission power control parameters for the SRS (for example, p0AlphaSetforSRS) associated with the indicated TCI state (joint/UL TCI state), or may be configured/provided using a new RRC parameter defined in Rel. 18 or later versions, for example.

The UE may calculate $P_{O\_SRS,b,f,c}(q_s)$ in calculation (for example, the above expression D1) of the transmission power for the SRS, based on the first transmission power control parameter (for example, p0) provided by specific higher layer parameters (for example, the parameter of the SRS resource set (for example, SRS-ResourceSet) and the SRS resource set ID (for example, SRS-ResourceSetId)).

The UE may assume/expect/determine that $P_{O\_SRS,b,f,c}(q_s)$ is the same value as the value (for example, $P_{O\_NOMINAL\_PUSCH}$) provided by a specific higher layer parameter (for example, p0-NominalWithGrant).

The UE may use the specific term for calculation of the transmission power for the SRS, when at least one of the following conditions is satisfied:

- The second transmission power control parameter (for the SRS) (for example, p0-r17) is configured.
- The transmission power control parameter for the SRS (for example, p0AlphaSetforSRS) associated with the indicated TCI state (joint/UL TCI state) is configured.
- The unified TCI state is configured for the SRS.
- The TCI state is configured for the SRS.

<<Option 2-3>>

The UE may use a second term (for example, $P_{O\_UE\_SRS}$) instead of a first term (for example, $P_{O\_SRS,b,f,c}(q_s)$) in calculation (for example, the above expression D1) of the transmission power for the SRS.

For example, when the RRC parameter (for example, followUnifiedTCI-State-r17/followUnifiedTCI-StateSRS-r17) indicating following the unified TCI state is configured for the SRS resource set, at least one of the second term (for example, $P_{O\_UE\_SRS}$), $\alpha$, and the power control adjustment state index may be provided by the transmission power control parameter for the SRS (for example, p0AlphaSetforSRS) associated with the indicated TCI state (joint/UL TCI state).

For example, when the RRC parameter (for example, followUnifiedTCI-State-r17/followUnifiedTCI-StateSRS-r17) indicating following the unified TCI state is not configured for the SRS resource set, at least one of the second term (for example, $P_{O\_UE\_SRS}$), $\alpha$, and the power control adjustment state index may be provided by the transmission power control parameter for the SRS (for example, p0AlphaSetforSRS) associated with the indicated TCI state (joint/UL TCI state) of a specific SRS resource.

In this case, the RS index $q_d$ related to $P_{SRS}/\alpha$ may be provided/configured by a path loss reference RS ID (for example, pathlossReferenceRS-Id-r17) associated with/included in the indicated TCI state (joint/UL TCI state) of the specific SRS resource.

The specific SRS resource may be an SRS resource corresponding to the lowest (or highest) SRS resource ID, for example.

According to the second embodiment described above, influence on information (for example, RRC parameters) defined in existing specifications can be relatively reduced, and transmission power control can be appropriately performed.

<Third Embodiment>

For the UE, the set (for example, p0AlphaSetforPUCCH) of transmission power control parameters for the PUCCH related to the unified TCI state may be configured/indicated.

The transmission power control parameters may at least indicate the parameter (for example, p0-r17) related to the transmission power offset (for example, p0), for example.

The transmission power control parameters may be transmission power control parameters used in configuration/indication/update of the unified TCI state (indicated TCI state).

The UE may perform transmission power control for the PUCCH, based on the transmission power control parameters. The UE may calculate/determine/configure/update $P_{O\_UE\_PUCCH}$, based on the transmission power control parameters.

A third embodiment is broadly divided into the following options 3-1 to 3-3. The UE/NW may follow one of options 3-1 to 3-3, or may follow a combination of at least two of options 3-1 to 3-3.

<<Option 3-1>>

The UE may apply the present embodiment, when at least one of the following conditions is satisfied:

- Whether or not specific UE capability information is reported (option 3-1-1).
- Whether or not the unified TCI state is configured (option 3-1-2).
- Whether or not the set of transmission power control parameters for the PUCCH related to the unified TCI state is configured (option 3-1-3).

Regarding option 3-1-1, for example, when the specific UE capability information is reported, the UE may apply the present embodiment.

Regarding option 3-1-2, for example, when the higher layer parameter (for example, TCI-State in dl-OrJointTCI-StateList, or TCI-UL-State) related to the unified TCI state is configured, the UE may apply the present embodiment.

Regarding option 3-1-3, when p0AlphaSetforPUCCH is configured, the UE may apply the present embodiment.

<<Option 3-2>>

The parameters for calculating/determining/configuring/updating $P_{O\_UE\_PUCCH}$ may be based on at least one of the following:

- The set (for example, p0AlphaSetforPUCCH-r17) of transmission power control parameters for the PUCCH related to the unified TCI state.
- The parameter (for example, p0-r17) related to the transmission power offset (for example, p0) in the set (for example, p0AlphaSetforPUCCH-r17) of transmission power control parameters for the PUCCH related to the unified TCI state.

<<Option 3-3>>

When operation according to the present embodiment is not applied, the UE may assume/expect that configuration/update of the transmission power control parameters based on the unified TCI state framework is not configured/indicated.

The UE supporting the unified TCI state may apply/support the present embodiment.

According to the third embodiment described above, the transmission power for the PUCCH can be controlled without defining new parameters, and implementation can be simplified.

<Fourth Embodiment>

For the UE, the set (for example, p0AlphaSetforPUCCH) of transmission power control parameters for the PUCCH related to the unified TCI state may be configured/indicated.

The transmission power control parameters may be at least one of the parameter (for example, p0-r17) related to the transmission power offset (for example, p0) and the parameter (for example, alpha-r17) indicating the path loss compensation coefficient for UL power control (for example, $\alpha$), for example.

The transmission power control parameters may be transmission power control parameters used in configuration/indication/update of the unified TCI state (indicated TCI state).

The transmission power control parameters may be indicated with absolute target power (absolute power), for example.

The UE may perform transmission power control for the PUCCH, based on the transmission power control parameters.

A fourth embodiment is broadly divided into the following options 4-1 to 4-3. The UE/NW may follow one of options 4-1 to 4-3, or may follow a combination of at least two of options 4-1 to 4-3.

<<Option 4-1>>

The transmission power control parameter (for example, p0-r17) may be indicated in an extended range of the range defined in up to Rel. 17.

The transmission power control parameters may be indicated in a first range, for example.

The first range may be indicated in a range (for example, a range of -202 to 24) indicating absolute power, for example.

Higher layer (RRC) parameters for configuring/indicating absolute target power may be newly defined. The UE may distinguish and use the transmission power control parameters defined in up to Rel. 17 and the new RRC parameters.

Note that at least one of options 1-1 to 1-4 of the first embodiment described above may be applied, with "SRS" being replaced with "PUCCH".

<<Option 4-2>>

The UE may apply the present embodiment, when at least one of the following conditions is satisfied:

- Whether or not specific UE capability information is reported (option 4-2-1).
- Whether or not the unified TCI state is configured (option 4-2-2).
- Whether or not the set of transmission power control parameters for the PUCCH related to the unified TCI state is configured (option 4-2-3).

Regarding option 4-3-1, for example, when the specific UE capability information is reported, the UE may apply the present embodiment.

Regarding option 4-3-2, for example, when the higher layer parameter (for example, TCI-State in dl-OrJointTCI-StateList, or TCI-UL-State) related to the unified TCI state is configured, the UE may apply the present embodiment.

Regarding option 4-2-3, when p0AlphaSetforPUCCH is configured, the UE may apply the present embodiment.

<<Option 4-3>>

When operation according to the present embodiment is not applied, the UE may assume/expect that configuration/update of the transmission power control parameters based on the unified TCI state framework is not configured/indicated.

The UE supporting the unified TCI state may apply/support the present embodiment.

According to the fourth embodiment described above, configuration/update of the target power for the PUCCH can be flexibly and appropriately performed.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

{Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- supporting of specific processing/operation/control/information regarding at least one of the embodiments described above.
- supporting of determination/update of the absolute target power for the SRS in the unified TCI state framework.
- supporting of determination/update of the differential power for the SRS in the unified TCI state framework.
- supporting of determination/update of the absolute target power for the PUCCH in the unified TCI state framework.
- supporting of determination/update of the differential power for the PUSCH in the unified TCI state framework.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of the operations of the above-described embodiments, any RRC parameter for a specific release (for example, Rel. 18/19), or the like. The RRC parameter may have a name obtained by adding "r18"/"r19" to a name of an existing RRC parameter.

When the UE does not support at least one of the specific UE capabilities above or is not configured with the specific information, operation of Rel. 15/16/17 may be applied, for example.

(Supplementary Note A)

Regarding one embodiment of the present disclosure, the following supplementary notes of the invention will be given.

{Supplementary Note A-1}

A terminal including:

a receiving section that receives a configuration related to a Transmission Configuration Indication (TCI) state applicable to a plurality of signals and a first sounding reference signal (SRS) transmission power parameter associated with the TCI state indicated with absolute power; and
a control section that performs transmission power control for an SRS, based on the first SRS transmission power parameter.

{Supplementary Note A-2}

The terminal according to supplementary note A-1, wherein the first SRS transmission power parameter is indicated in a range wider than the range of a second SRS transmission power parameter associated with the TCI state indicated with differential power.

{Supplementary Note A-3}

The terminal according to supplementary note A-1 or A-2, wherein

the receiving section further receives a second SRS transmission power parameter associated with the TCI state indicated with differential power, and
the control section performs the transmission power control for the SRS by using one of the first SRS transmission power parameter and the second SRS transmission power parameter.

{Supplementary Note A-4}

The terminal according to any one of supplementary notes A-1 to A-3, wherein the first SRS transmission power parameter includes a combination of a second SRS transmission power parameter associated with the TCI state indicated with differential power and another parameter.

(Supplementary Note B)

Regarding one embodiment of the present disclosure, the following supplementary notes of the invention will be given.

{Supplementary Note B-1}

A terminal including:

a receiving section that receives a configuration related to a Transmission Configuration Indication (TCI) state applicable to a plurality of signals and a first physical uplink control channel (PUCCH) transmission power parameter associated with the TCI state indicated with absolute power; and
a control section that performs transmission power control for a PUCCH, based on the first PUCCH transmission power parameter.

{Supplementary Note B-2}

The terminal according to supplementary note B-1, wherein the first PUCCH transmission power parameter is indicated in a range wider than the range of a second PUCCH transmission power parameter associated with the TCI state indicated with differential power.

{Supplementary Note B-3}

The terminal according to supplementary note B-1 or B-2, wherein

the receiving section further receives a second PUCCH transmission power parameter associated with the TCI state indicated with differential power, and

the control section performs the transmission power control for the PUCCH by using one of the first PUCCH transmission power parameter and the second PUCCH transmission power parameter.

{Supplementary Note B-4}

The terminal according to any one of supplementary notes B-1 to B-3, wherein the first PUCCH transmission power parameter includes a combination of a second PUCCH transmission power parameter associated with the TCI state indicated with differential power and another parameter.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

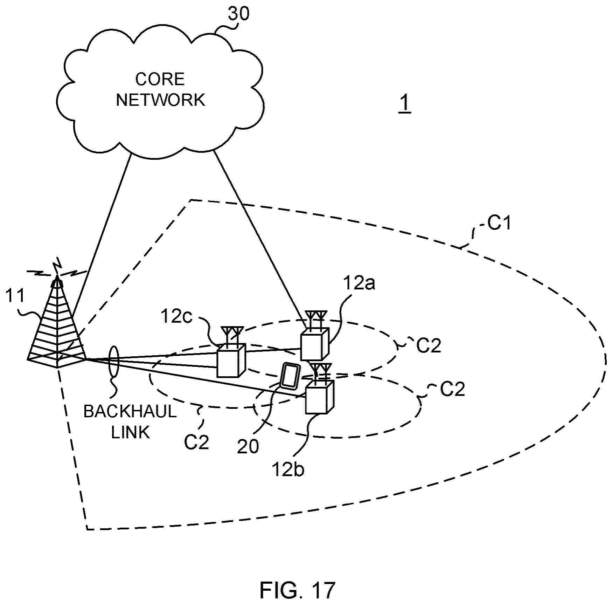

FIG. 17 is a diagram to show an example of a schematic structure of the radio communication system according to one embodiment. A radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs), such as a User Plane Function (UPF), an Access and Mobility management Function (AMF), a Session Management Function (SMF), Unified Data Management (UDM), an Application Function (AF), a Data Network (DN), a Location Management Function (LMF), and Operation, Administration and Maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

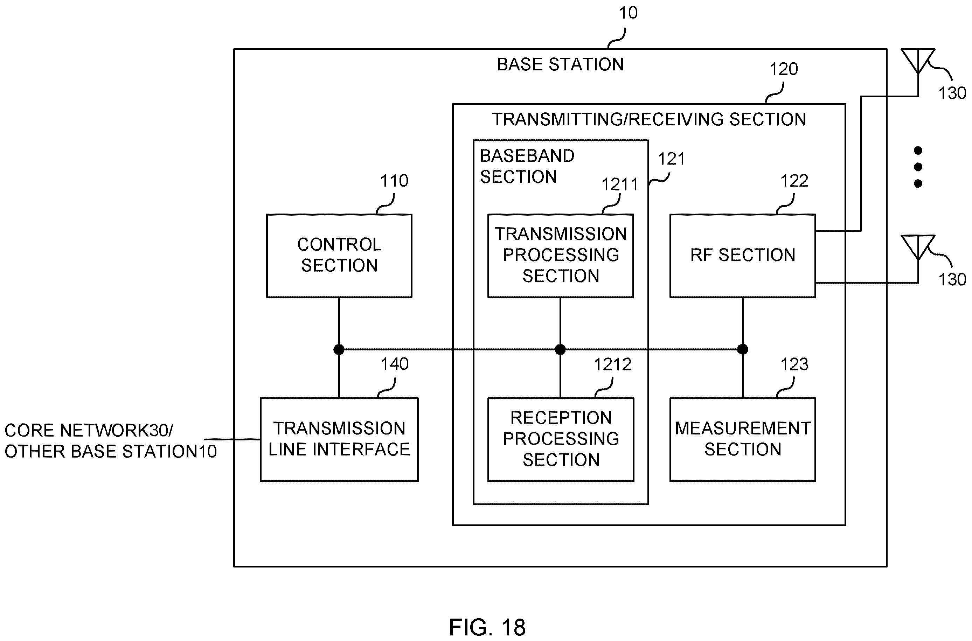

FIG. 18 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides NFs) included in the core network 30, other base stations 10, and so on, and, for example, acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration related to a Transmission Configuration Indication (TCI) state (unified TCI state) applicable to a plurality of signals and a first sounding reference signal (SRS) transmission power parameter associated with the TCI state indicated with absolute power. The control section 110 may indicate transmission power control for an SRS by using the first SRS transmission power parameter (first/second embodiment).

The transmitting/receiving section 120 may transmit a configuration related to a Transmission Configuration Indication (TCI) state (unified TCI state) applicable to a plurality of signals and a first physical uplink control channel (PUCCH) transmission power parameter associated with the TCI state indicated with absolute power. The control section 110 may indicate transmission power control for a PUCCH by using the first PUCCH transmission power parameter (third/fourth embodiment).

(User Terminal)

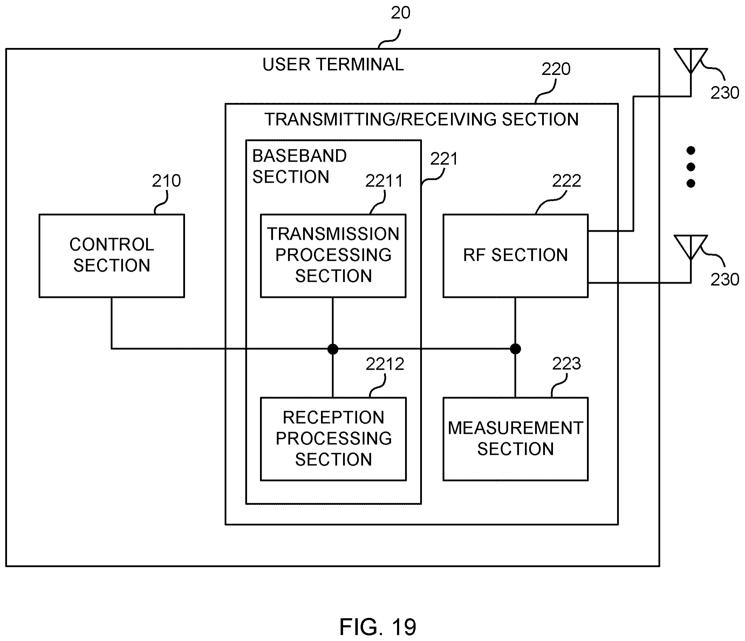

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on resources for channel measurement. The resources for channel measurement may be non zero power (NZP) CSI-RS resources, for example. The measurement section 223 may derive interference measurement for CSI calculation, based on resources for interference measurement. The resources for interference measurement may be at least one of NZP CSI-RS resources for interference measurement, CSI-interference measurement (IM) resources, and the like. Note that CSI-IM may be referred to as CSI-interference management (IM), or may be interchangeably interpreted as a zero power (ZP) CSI-RS. Note that, in the present disclosure, a CSI-RS, an NZP CSI-RS, a ZP CSI-RS, CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration related to a Transmission Configuration Indication (TCI) state (unified TCI state) applicable to a plurality of signals and a first sounding reference signal (SRS) transmission power parameter associated with the TCI state indicated with absolute power. The control section 210 may perform transmission power control for an SRS, based on the first SRS transmission power parameter (first/second embodiment).

The first SRS transmission power parameter may be indicated in a range wider than the range of a second SRS transmission power parameter associated with the TCI state indicated with differential power (first embodiment).

The transmitting/receiving section 220 may further receive a second SRS transmission power parameter associated with the TCI state indicated with differential power. The control section 210 may perform the transmission power control for the SRS by using one of the first SRS transmission power parameter and the second SRS transmission power parameter (first embodiment).

The first SRS transmission power parameter may include a combination of a second SRS transmission power parameter associated with the TCI state indicated with differential power and another parameter (first embodiment).

The transmitting/receiving section 220 may receive a configuration related to a Transmission Configuration Indication (TCI) state (unified TCI state) applicable to a plurality of signals and a first physical uplink control channel (PUCCH) transmission power parameter associated with the TCI state indicated with absolute power. The control section 210 may perform transmission power control for a PUCCH, based on the first PUCCH transmission power parameter (third/fourth embodiment).

The first PUCCH transmission power parameter may be indicated in a range wider than the range of a second PUCCH transmission power parameter associated with the TCI state indicated with differential power (fourth embodiment).

The transmitting/receiving section 220 may further receive a second PUCCH transmission power parameter associated with the TCI state indicated with differential power. The control section 210 may perform the transmission power control for the PUCCH by using one of the first PUCCH transmission power parameter and the second PUCCH transmission power parameter (fourth embodiment).

The first PUCCH transmission power parameter may include a combination of a second PUCCH transmission power parameter associated with the TCI state indicated with differential power and another parameter (fourth embodiment).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

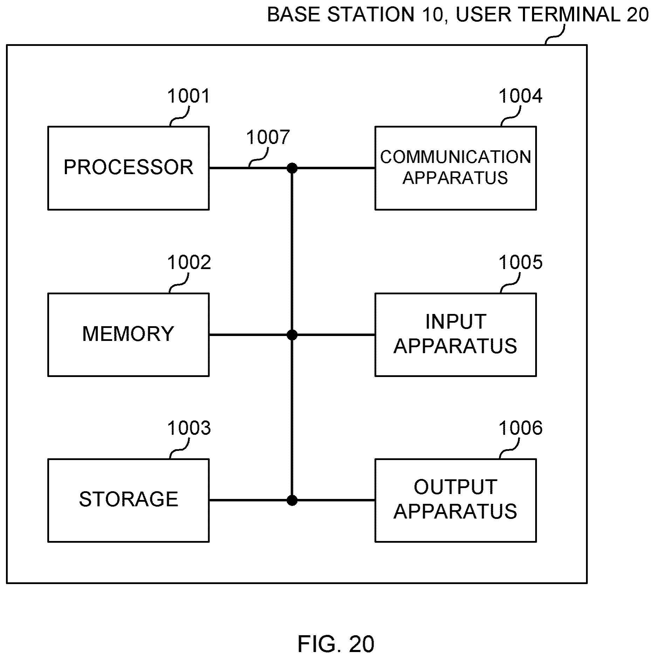

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit" "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

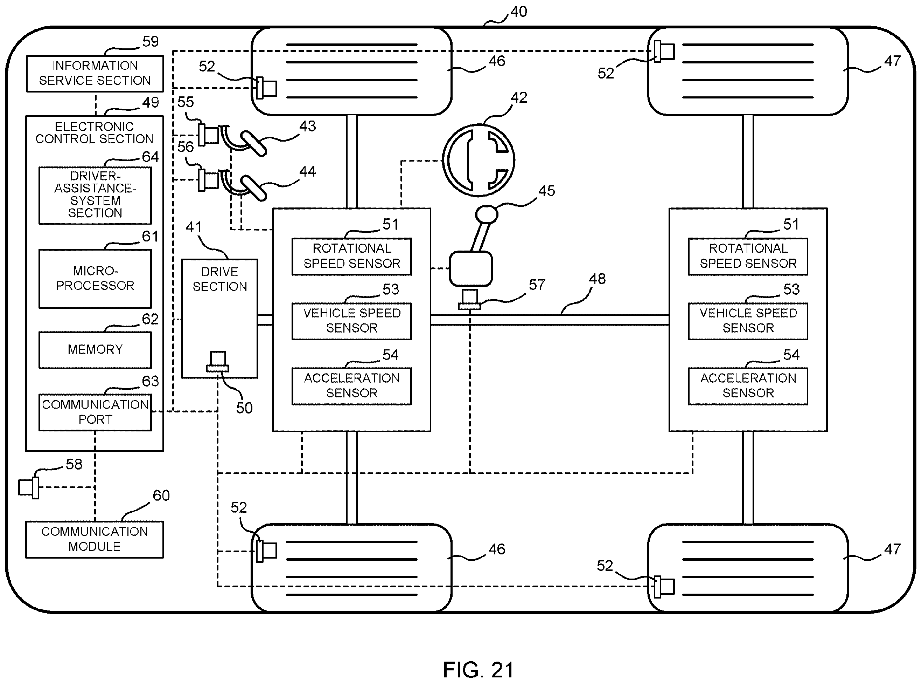

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

**EP 4 694 387 A1**

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

**Claims**

1. A terminal comprising:

    a receiving section that receives a configuration related to a Transmission Configuration Indication (TCI) state applicable to a plurality of signals and a first sounding reference signal (SRS) transmission power parameter associated with the TCI state indicated with absolute power; and
    a control section that performs transmission power control for an SRS, based on the first SRS transmission power parameter.

2. The terminal according to claim 1, wherein
the first SRS transmission power parameter is indicated in a range wider than the range of a second SRS transmission power parameter associated with the TCI state indicated with differential power.

3. The terminal according to claim 1, wherein

    the receiving section further receives a second SRS transmission power parameter associated with the TCI state indicated with differential power, and
    the control section performs the transmission power control for the SRS by using one of the first SRS transmission power parameter and the second SRS transmission power parameter.

4. The terminal according to claim 1, wherein
the first SRS transmission power parameter includes a combination of a second SRS transmission power parameter associated with the TCI state indicated with differential power and another parameter.

5. A radio communication method for a terminal, the radio communication method comprising:

    receiving a configuration related to a Transmission Configuration Indication (TCI) state applicable to a plurality of signals and a first sounding reference signal (SRS) transmission power parameter associated with the TCI state indicated with absolute power; and
    performing transmission power control for an SRS, based on the first SRS transmission power parameter.

6. A base station comprising:

    a transmitting section that transmits a configuration related to a Transmission Configuration Indication (TCI) state applicable to a plurality of signals and a first sounding reference signal (SRS) transmission power parameter associated with the TCI state indicated with absolute power; and
    a control section that indicates transmission power control for an SRS by using the first SRS transmission power parameter.

```
SRS-ResourceSet ::=                    SEQUENCE {
    srs-ResourceSetId                  SRS-ResourceSetId,
    srs-ResourceIdList                 SEQUENCE (SIZE(1..maxNrofSRS-ResourcesPerSet)) OF SRS-ResourceId
                                                                                          OPTIONAL, -- Cond Setup
    resourceType                       CHOICE {
        aperiodic                          SEQUENCE {
            aperiodicSRS-ResourceTrigger       INTEGER (1..maxNrofSRS-TriggerStates-1),
            csi-RS                             NZP-CSI-RS-ResourceId                       OPTIONAL,  -- Cond NonCodebook
            slotOffset                         INTEGER (1..32)                            OPTIONAL,  -- Need S
            ...,
            [[
            aperiodicSRS-ResourceTriggerList   SEQUENCE (SIZE(1..maxNrofSRS-TriggerStates-2))
                                                   OF INTEGER (1..maxNrofSRS-TriggerStates-1)
                                                                                          OPTIONAL  -- Need M
            ]]
        },
        semi-persistent                    SEQUENCE {
            associatedCSI-RS                   NZP-CSI-RS-ResourceId                       OPTIONAL,  -- Cond NonCodebook
            ...
        },
        periodic                           SEQUENCE {
            associatedCSI-RS                   NZP-CSI-RS-ResourceId                       OPTIONAL,  -- Cond NonCodebook
            ...
        }
    },
    usage                              ENUMERATED {beamManagement, codebook, nonCodebook, antennaSwitching},
    alpha                              Alpha                                              OPTIONAL,  -- Need S
    p0                                 INTEGER (-202..24)                                 OPTIONAL,  -- Cond Setup
    pathlossReferenceRS                PathlossReferenceRS-Config                         OPTIONAL,  -- Need M
    srs-PowerControlAdjustmentStates   ENUMERATED { sameAsFci2, separateClosedLoop}       OPTIONAL,  -- Need S
    ...,
    [[
    pathlossReferenceRSList-r16        SetupRelease { PathlossReferenceRSList-r16}        OPTIONAL   -- Need M
    ]]
}
```

FIG. 1

```
SRS-Resource ::=                            SEQUENCE {
    srs-ResourceId                              SRS-ResourceId,
    nrofSRS-Ports                               ENUMERATED {port1, ports2,
ports4},
    ptrs-PortIndex                              ENUMERATED {n0, n1 }
    transmissionComb                            CHOICE {
        n2                                          SEQUENCE {
            combOffset-n2                               INTEGER (0..1),
            cyclicShift-n2                              INTEGER (0..7)
        },
        n4                                          SEQUENCE {
            combOffset-n4                               INTEGER (0..3),
            cyclicShift-n4                              INTEGER (0..11)
        }
    },
    resourceMapping                             SEQUENCE {
        startPosition                               INTEGER (0..5),
        nrofSymbols                                 ENUMERATED {n1, n2, n4},
        repetitionFactor                            ENUMERATED {n1, n2, n4}
    },
    freqDomainPosition                          INTEGER (0..67),
    freqDomainShift                             INTEGER (0..268),
    freqHopping                                 SEQUENCE {
        c-SRS                                       INTEGER (0..63),
        b-SRS                                       INTEGER (0..3),
        b-hop                                       INTEGER (0..3)
    },
    groupOrSequenceHopping                      ENUMERATED { neither,
groupHopping, sequenceHopping },
    resourceType                                CHOICE {
        aperiodic                                   SEQUENCE {
            ...
        },
        semi-persistent                             SEQUENCE {
            periodicityAndOffset-sp                     SRS-
PeriodicityAndOffset,
            ...
        },
        periodic                                    SEQUENCE {
            periodicityAndOffset-p                      SRS-
PeriodicityAndOffset,
            ...
        }
    },
    sequenceId                                  INTEGER (0..1023),
    spatialRelationInfo                         SRS-SpatialRelationInfo
    ...,
    [[
    resourceMapping-r16                         SEQUENCE {
        startPosition-r16                           INTEGER (0..13),
        nrofSymbols-r16                             ENUMERATED {n1, n2, n4},
        repetitionFactor-r16                        ENUMERATED {n1, n2, n4}
    }
    ]]
```

FIG. 2

Maximum number of cyclic shifts $n_{SRS}^{CS,max}$ as a function of $K_{TC}$

| $K_{TC}$ | $n_{SRS}^{cs,max}$ |
|:---:|:---:|
| 2 | 8 |
| 4 | 12 |
| 8 | 6 |

FIG. 3

cyclic shifts in case of 2-port

| $N_{ap}^{SRS}$ | $K_{TC}(n_{SRS}^{CS,max})$ | $n_{SRS}^{CS,i}$ |
|---|---|---|
| 2 | 2 (8) | $n_{SRS}^{CS}, (n_{SRS}^{CS} + 4) \bmod 8$ |
| 2 | 4 (12) | $n_{SRS}^{CS}, (n_{SRS}^{CS} + 6) \bmod 12$ |
| 2 | 8 (6) | $n_{SRS}^{CS}, (n_{SRS}^{CS} + 3) \bmod 6$ |

FIG. 4

cyclic shifts in case of 4-port

| $N_{ap}^{SRS}$ | $K_{TC}(n_{SRS}^{CS,max})$ | $n_{SRS}^{CS,i}$ |
|---|---|---|
| 4 | 2 (8) | $n_{SRS}^{CS}, (n_{SRS}^{CS} + 2) \bmod 8, (n_{SRS}^{CS} + 4) \bmod 8, (n_{SRS}^{CS} + 6) \bmod 8$ |
| 4 | 4 (12) | $n_{SRS}^{CS}, (n_{SRS}^{CS} + 3) \bmod 12, (n_{SRS}^{CS} + 6) \bmod 12, (n_{SRS}^{CS} + 9) \bmod 12$ |
| 4 | 8 (6) | $n_{SRS}^{CS}, n_{SRS}^{CS}, (n_{SRS}^{CS} + 3) \bmod 6, (n_{SRS}^{CS} + 3) \bmod 6$ |

FIG. 5

frequency domain starting positions in case of 2-port

| $N_{ap}^{SRS}$ | $K_{TC}(n_{SRS}^{CS,max})$ | $k_{TC}^{p_i}$ |
|---|---|---|
| 2 | - | $\bar{k}_{TC}$ (CS-only) |

FIG. 6

frequency domain starting positions in case of 4-port

| $N_{ap}^{SRS}$ | $K_{TC}(n_{SRS}^{CS,max})$ | $n_{SRS}^{CS}$ | $k_{TC}^{p_i}$ |
|---|---|---|---|
| 4 | 2 (8) | {0,1,2,3} | $\bar{k}_{TC}$ (CS-only) |
| 4 | 2 (8) | {4,5,6,7} | $\bar{k}_{TC}, \bar{k}_{TC}+1, \bar{k}_{TC}, \bar{k}_{TC}+1$ |
| 4 | 4 (12) | {0,1,2,3,4,5} | $\bar{k}_{TC}$ (CS-only) |
| 4 | 4 (12) | {6,7,8,9,10,11} | $\bar{k}_{TC}, \bar{k}_{TC}+2, \bar{k}_{TC}, \bar{k}_{TC}+2$ |
| 4 | 8 (6) | - | $\bar{k}_{TC}, \bar{k}_{TC}+4, \bar{k}_{TC}, \bar{k}_{TC}+4$ |

FIG. 7

FIG. 8

FIG. 9

FIG. 10A

configuration
for DL&UL
(RRC)

SSB/
CSI-RS/
SRS

activation
for DL&UL
(MAC CE)

active TCI pool for DL&UL

joint indication

indication
for DL&UL
(DCI)

one or
subset of
all DL&UL

FIG. 10B

configuration
for DL&UL
(RRC)

SSB/
CSI-RS/
SRS

activation
for DL/UL
(MAC CE)

active TCI pool for
DL&UL, or
separate active TCI pools
for DL&UL

separate indication

indication
for DL
(DCI)

one or
subset of
all DL

indication
for UL
(DCI)

one or
subset of
all UL

FIG. 11A

Joint DL/UL TCI state

| TCI field value | Joint DL/UL TCI state |
|---|---|
| 000 | TCI#0 |
| 001 | TCI#1 |
| 010 | TCI#2 |
| 011 | TCI#3 |
| 100 | TCI#4 |
| 101 | TCI#5 |
| 110 | TCI#6 |
| 111 | TCI#7 |

FIG. 11B

Separate DL/UL TCI state

| TCI field value | DL only TCI state | UL only TCI state | |
|---|---|---|---|
| 000 | TCI#0 | - | DL TCI state |
| 001 | TCI#1 | - | |
| 010 | - | TCI#2 | UL TCI state |
| 011 | - | TCI#3 | |
| 100 | TCI#4 | TCI#5 | |
| 101 | TCI#6 | TCI#7 | Both of DL TCI state and UL TCI state |
| 110 | TCI#8 | TCI#9 | |
| 111 | TCI#10 | TCI#11 | |

```
Uplink-powerControl-r17 ::= SEQUENCE {
    ul-powercontrolId-r17   Uplink-powerControlId-r17,
    p0AlphaSetforPUSCH-r17  P0AlphaSet-r17 OPTIONAL, -- Need R
    p0AlphaSetforPUCCH-r17  P0AlphaSet-r17 OPTIONAL, -- Need R
    p0AlphaSetforSRS-r17    P0AlphaSet-r17 OPTIONAL -- Need R
}
P0AlphaSet-r17 ::= SEQUENCE {
    p0-r17      INTEGER (-16..15) OPTIONAL, -- Need R
    alpha-r17   Alpha OPTIONAL, -- Need S
    closedLoopIndex-r17 ENUMERATED { i0, i1 }
}
Uplink-powerControlId-r17 ::= INTEGER(1.. maxUL-TCI-r17)
```

FIG. 12

```
Uplink-powerControl-r17 ::= SEQUENCE {
    ul-powercontrolId-r17   Uplink-powerControlId-r17,
    p0AlphaSetforPUSCH-r17  P0AlphaSet-r17 OPTIONAL, -- Need R
    p0AlphaSetforPUCCH-r17  P0AlphaSet-r17 OPTIONAL, -- Need R
    p0AlphaSetforSRS-r17    P0AlphaSet-r17 OPTIONAL -- Need R
}
P0AlphaSet-r17 ::= SEQUENCE {
    p0-r17      INTEGER (-202..24) OPTIONAL, -- Need R
    alpha-r17   Alpha OPTIONAL, -- Need S
    closedLoopIndex-r17 ENUMERATED { i0, i1 }
}
Uplink-powerControlId-r17 ::= INTEGER(1.. maxUL-TCI-r17)
```

FIG. 13

```
Uplink-powerControl-r17 ::= SEQUENCE {
    ul-powercontrolId-r17    Uplink-powerControlId-r17,
    p0AlphaSetforPUSCH-r17   P0AlphaSet-r17 OPTIONAL, -- Need R
    p0AlphaSetforPUCCH-r17   P0AlphaSet-r17 OPTIONAL, -- Need R
    p0AlphaSetforSRS-r17     P0AlphaSet-r17 OPTIONAL -- Need R
}
P0AlphaSet-r17 ::= SEQUENCE {
    p0-r17     INTEGER (-16..15) OPTIONAL, -- Need R
    p0-r17xx   INTEGER (-202..24) OPTIONAL, -- Need R
    alpha-r17 Alpha OPTIONAL, -- Need S
    closedLoopIndex-r17 ENUMERATED { i0, i1 }
}
Uplink-powerControlId-r17 ::= INTEGER(1.. maxUL-TCI-r17)
```

FIG. 14

```
Uplink-powerControl-r17 ::= SEQUENCE {
    ul-powercontrolId-r17    Uplink-powerControlId-r17,
    p0AlphaSetforPUSCH-r17   P0AlphaSet-r17 OPTIONAL, -- Need R
    p0AlphaSetforPUCCH-r17   P0AlphaSet-r17 OPTIONAL, -- Need R
    p0AlphaSetforSRS-r17     P0AlphaSet-r17 OPTIONAL -- Need R
    p0AlphaSetforSRS-r17xx   P0AlphaSet-r17xx OPTIONAL -- Need R
}
P0AlphaSet-r17 ::= SEQUENCE {
    p0-r17       INTEGER (-16..15) OPTIONAL, -- Need R
    alpha-r17  Alpha OPTIONAL, -- Need S
    closedLoopIndex-r17 ENUMERATED { i0, i1 }
}
P0AlphaSet-r17xx ::= SEQUENCE {
    p0-r17       INTEGER (-202..24) OPTIONAL, -- Need R
    alpha-r17  Alpha OPTIONAL, -- Need S
    closedLoopIndex-r17 ENUMERATED { i0, i1 }
}
Uplink-powerControlId-r17 ::= INTEGER(1.. maxUL-TCI-r17)
```

FIG. 15

```
Uplink-powerControl-r17 ::= SEQUENCE {
    ul-powercontrolId-r17   Uplink-powerControlId-r17,
    p0AlphaSetforPUSCH-r17  P0AlphaSet-r17 OPTIONAL, -- Need R
    p0AlphaSetforPUCCH-r17  P0AlphaSet-r17 OPTIONAL, -- Need R
    p0AlphaSetforSRS-r17    P0AlphaSet-r17 OPTIONAL -- Need R
}
P0AlphaSet-r17 ::= SEQUENCE {
    p0-r17    INTEGER (-16..15) OPTIONAL, -- Need R
    p0-r17xx  xxx OPTIONAL, -- Need R
    alpha-r17 Alpha OPTIONAL, -- Need  S
    closedLoopIndex-r17 ENUMERATED { i0, i1 }
}

Uplink-powerControlId-r17 ::= INTEGER(1.. maxUL-TCI-r17)
```

FIG. 16

FIG. 17

FIG. 18

EP 4 694 387 A1

FIG. 19

EP 4 694 387 A1

BASE STATION 10, USER TERMINAL 20

1001

PROCESSOR

1007

COMMUNICATION
APPARATUS

1004

1002

MEMORY

INPUT
APPARATUS

1005

1003

STORAGE

OUTPUT
APPARATUS

1006

FIG. 20

FIG. 21

## INTERNATIONAL SEARCH REPORT

| | |
|---|---|
| International application No. | |
| | **PCT/JP2023/014442** |

| A. | CLASSIFICATION OF SUBJECT MATTER |
|---|---|

*H04W 52/18*(2009.01)i; *H04W 16/28*(2009.01)i; *H04W 72/21*(2023.01)i
FI:   H04W52/18; H04W72/21; H04W16/28

According to International Patent Classification (IPC) or to both national classification and IPC

| B. | FIELDS SEARCHED |
|---|---|

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | 3rd Generation Partnership Project; Technical Specification Group Radio Access Network; NR: Physical layer procedures for control (Release 17), 3GPP TS 38.213 V17.5.0, March 2023, pp. 20, 21, 40<br>        particularly, sections 7, 7.3.1 | 1, 5-6 |
| Y | | 2 |
| A | | 3-4 |
| Y | 3rd Generation Partnership Project; Technical Specification Group Radio Access Network; NR: Radio Resource Control (RRC) protocol specification (Release 17), 3GPP TS 38.331 V17.4.0, March 2023, pp. 887, 888, 926<br>        pp. 887, 888, 926 | 2 |

☐ Further documents are listed in the continuation of Box C.     ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 October 2023** | **07 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)